# EUROPEAN PATENT APPLICATION

(11) **EP 3 739 420 A1**
(43) Date of publication of application: **18.11.2020**
(21) Application number: 19737980.3
(22) Date of filing: 15.01.2019
(51) Int. Cl.: G05D 1/10, B64C 13/18, B64C 39/02, G08G 5/04, B64D 45/04

(54) **INFORMATION PROCESSING SYSTEM**

(30) Priority: 15.01.2018 JP 2018004562
(71) Applicant: Hongo Aerospace Inc., Tokyo 113-0033 (JP)
(72) Inventor: KANEDA Kenya, Tokyo 113-0033 (JP)
(74) Representative: Ström & Gulliksson AB
(86) International application number: PCT/JP2019/000957
(87) International publication number: WO 2019/139172

(57) **Abstract**

The purpose of the present invention is to effectively use a small unmanned aircraft in all fields in which research and development are advancing. An information processing system that includes a drone 1 having a drive unit 11 for moving in a space, wherein a distance detection unit 101 of the drone 1 individually detects the distance D to one or more prescribed positions WP of a wall surface W, during movement in the space by the drone 1 near the wall surface W. A shortest distance calculation unit 103 calculates the shortest distance SD from the drone 1 to the wall surface W on the basis of these distances D. A flight control unit 104 executes control of the driving of the drive unit 11 so that the shortest distance SD is equal to or less than a prescribed value.

## Description

### TECHNICAL FIELD

The present invention relates to an information processing system.

### BACKGROUND ART

In recent years, small unmanned aircraft (typically drones) have been actively researched and developed (see, for example, Patent Document 1).

Patent Document 1: Japanese Unexamined Patent Application, Publication No. 2015-207149

### DISCLOSURE OF THE INVENTION

### Problems to be Solved by the Invention

There has been a request to effectively utilize small unmanned aircraft in which research and development are advancing in all fields.

The present invention has been made in view of such a situation. It is an object of the present invention to effectively utilize small unmanned aircraft in all fields.

### Means for Solving the Problems

An information processing system according to one embodiment of the present invention includes a moving body having a drive means for moving in space, in which the moving body includes: a distance detection means that detects a distance to at least one predetermined position of a surface of an object during movement in a space near the object; a shortest distance calculation means that calculates the shortest distance from the moving body to the surface of the object based on the distance detected; and a drive control means that carries out control of the driving of the drive means such that the shortest distance is not equal to or less than a predetermined value.

Further, the distance detection means can detect the distance based on image information obtained from a captured image of the at least one predetermined position.

Further, an orientation detection means that detects an orientation of the moving body based on at least one distance detected can be further provided, and the drive control means can further carry out control of the driving of the drive means such that at least one distance of the at least one distance is not equal to or less than the predetermined distance considering the distance.

Further, the moving body can be a small unmanned aircraft.

### Effects of the Invention

The present invention enables effective utilization of small unmanned aircraft in all fields.

### BRIEF DESCRIPTION OF THE DRAWINGS

FIG 1 is an image view illustrating the outline of flight control between a drone as a moving body included in an information processing system of the present invention and a pilot terminal;
FIG 2 is a functional block diagram illustrating examples of functional configurations for realizing various kinds of processing illustrated in FIG 3 to FIG 18 carried out by the drone of FIG 1;
FIG 3 is an image view illustrating a state in which the drone including one distance sensor flies in a space near a wall surface;
FIG 4 is an image view illustrating a state in which the drone including two distance sensors flies in the space near the wall surface;
FIG 5 is an image view illustrating a state in which the drone including one distance sensor having a swinging function flies in the space near the wall surface;
FIG 6 is an image view illustrating an example of controlling the flight of the drone based on position information obtained from a GPS satellite;
FIG 7 is an image view illustrating an example of controlling the flight of the drone based on information obtained from an information transceiver;
FIG 8 is an image view illustrating a state in which the working drone flies in the space near the wall surface while estimating the position of the device itself utilizing a relay drone;
FIG 9 is a cross-sectional image view illustrating a state in which the drone flies in a pipeline; FIG 10 is a cross-sectional image view illustrating a state in which the drone including distance sensors flies in a pipeline;
FIG 11 is a cross-sectional image view illustrating a state in which the drone including distance sensors is about to fly in a branch section in the pipeline;
FIG 12 is a cross-sectional image view illustrating a state in which the drone flies in the pipeline while estimating the orientation of the device itself and the shortest distance based on the variation of the distance varying with time;
FIG 13 is a cross-sectional image view illustrating a state in which the drone estimates the moving distance of the device itself using a radio wave device;
FIG 14 is an image view illustrating a state in which the drone flies with a collecting container for collecting a water sample suspended therefrom;
FIG 15 is an image view illustrating a state of storing the collecting container in a sample storage section;
FIG 16 is an image view illustrating an example of a marker whose image is captured by the drone;
FIG 17 is an image view illustrating a state in which the drone performs predetermined work while uniformly flying above a field; and
FIG 18 is an image view illustrating an example of an operation screen for operating the drone displayed on the pilot terminal.

### PREFERRED MODE FOR CARRYING OUT THE INVENTION

Hereinafter, embodiments of an information processing system according to the present invention are described with reference to an information processing system including a small unmanned aircraft (hereinafter referred to as a "drone") 1 movable in a three-dimensional space using the drawings.

### [Outline of system]

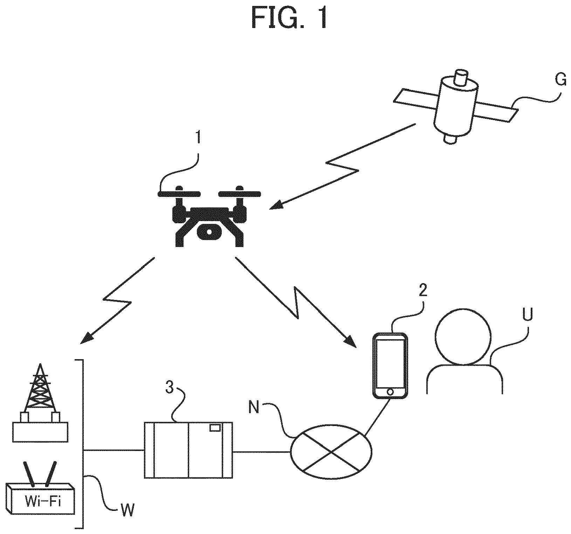

FIG 1 is an image view illustrating the outline of flight control between a drone 1 of the present embodiments and a pilot terminal 2.

As illustrated in FIG. 1, the drone 1 acquires position information from a GPS (Global Positioning System) satellite G The drone 1 transmits the position information and flight information including information on the attitude, information on rotational motion, and the like of the drone 1 obtained from various onboard sensors on the drone 1 to the pilot terminal 2. The pilot terminal 2 is a terminal containing a smartphone or the like and used in order for a pilot U to pilot the drone 1. When the drone 1 flies in an area covered by radio waves from the pilot terminal 2, the drone 1 and the pilot terminal 2 directly communicate with each other in real time. Hereinafter, such a direct communication route is referred to as a "direct route". Whereas, when the drone 1 flies in an area outside the area covered by radio waves from the pilot terminal 2, direct communication cannot be performed between the drone 1 and the pilot terminal 2, and therefore indirect communication is performed. Specifically, the pilot terminal 2 acquires the position information, the flight information, and the like of the drone 1 from a server 3, and then transmits information for controlling the flight of the drone 1 referring to the information through a network N, such as the Internet or a portable carrier network. Hereinafter, such an indirect communication route via the server 3 is referred to as a "route via server". Thus, the pilot U pilots the drone 1 through the "direct route" or the "route via server" by operating the pilot terminal 2.

First to seventh embodiments described below can be realized under the above-described information processing system.

### [First embodiment]

### (Drone for wall surface inspection work)

Conventionally, whether abnormalities occur in a wall surface W of a dam, a building, or the like has been determined based on inspection results obtained by visual observation of a worker. However, a portion to be inspected of the wall surface W of a dam, a building, or the like is a high place in many cases. Therefore, an inspection worker always performs inspection work with a risk of falling. Thus, performing the inspection work in an unmanned manner by utilizing a drone mounted with a camera has been considered. However, wind blowing near the wall surface of a dam, a building, or the like is turbulent in many cases and further the drone is entirely tilted in moving, which makes it difficult to accurately capture the portion to be inspected with the camera. Therefore, an adequate skill level is required for easily remotely controlling the drone. Hence, there is demand for automatically performing the inspection work by the drone.

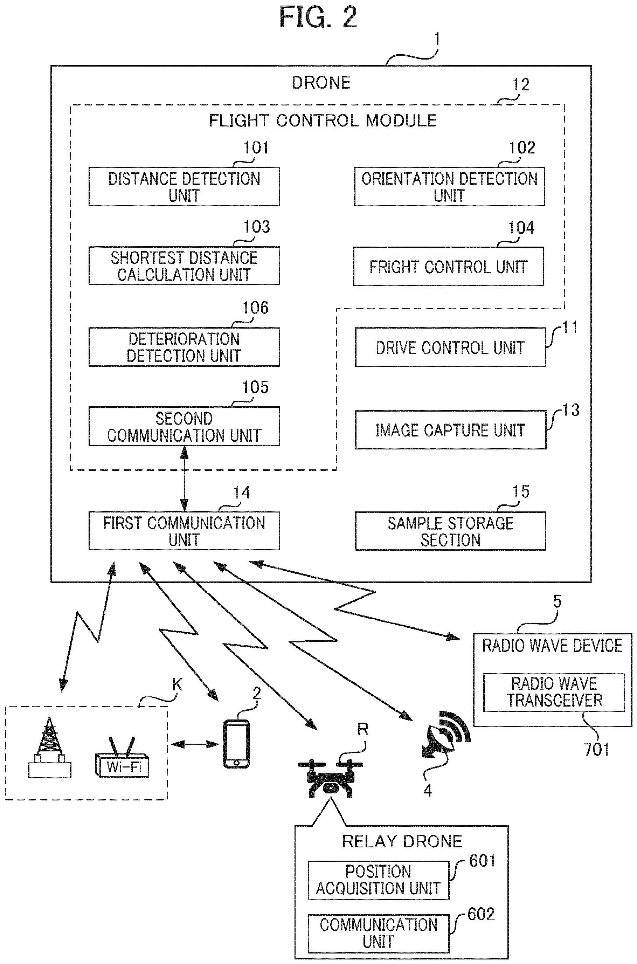

The drone 1 of a first embodiment is a drone realizing such a request and that is capable of automatically performing inspection work even in a place where the wind is turbulent in the vicinity of the wall surface of a dam, a building, or the like. Functional configurations of such a drone 1 are described with reference to FIG. 2.

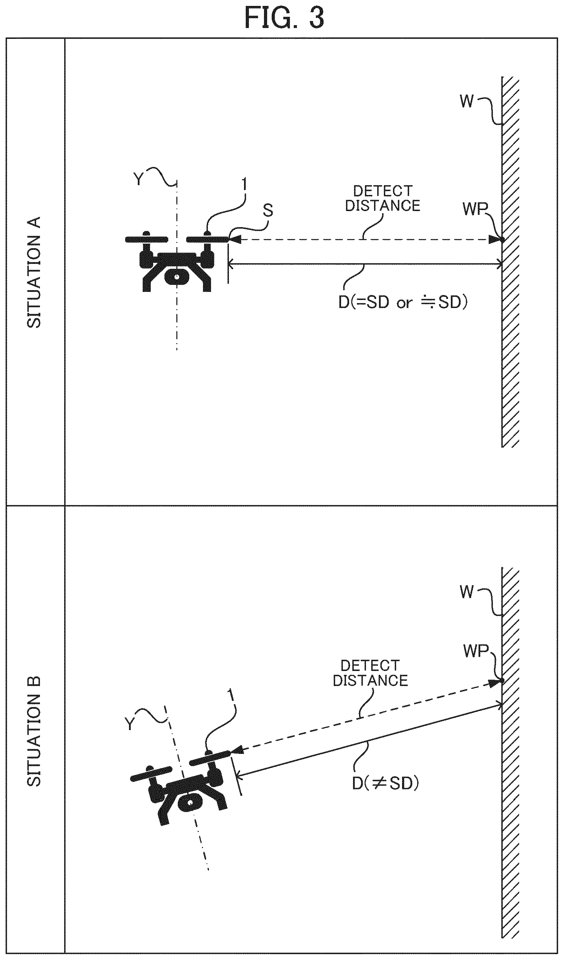

FIG 2 is a functional block diagram illustrating examples of functional configurations for realizing various kinds of processing illustrated in FIG 3 to FIG 18 carried out by the drone 1.

As illustrated in FIG. 2, the drone 1 is a moving body including a drive unit 11, a flight control module 12, an image capture unit 13, a first communication unit 14, and a sample storage section 15. The "moving body" in the present invention includes all objects moving in space by a drive unit. The drone 1 in the first to seventh embodiments is an example of a "moving body" moving while flying in space by being driven by the drive unit 11 as a drive means.

The drive unit 11 performs driving using supplied energy. The drone 1 can move in space by being driven by the drive unit 11. Both a motor performing driving using electric energy and an engine performing driving using chemical energy, such as gasoline, are examples of the drive unit 11.

The flight control module 12 carries out control of the flight of the drone 1. This enables the drone 1 to perform the inspection work of the wall surface W while automatically controlling the flight of the device itself even in the place where the wind is turbulent in the vicinity of the wall surface W of a dam, a building, or the like. The flight control module 12 includes a distance detection unit 101, an orientation detection unit 102, a shortest distance calculation unit 103, a flight control unit 104, a second communication unit 105, and a deterioration detection unit 106. In the drone 1 of the first embodiment, the distance detection unit 101 to the second communication unit 105 at least function in the flight control module 12.

The flight control module 12 can be independently distributed as a module product. Therefore, by mounting the flight control module 12 on a conventional drone in a retrofitting manner, for example, the conventional drone can be utilized as the drone 1.

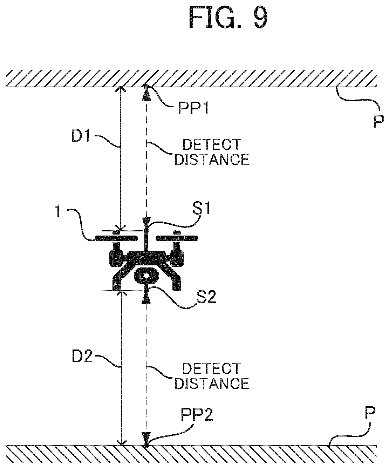

The distance detection unit 101 detects a distance to at least one predetermined position of the surface of an object during movement in a space near the object. Specifically, as illustrated in FIG 3 to FIG 8 described later, the distance detection unit 101 detects each distance D1 to Dn (n is an integer value equal to or larger than 1) to at least one predetermined position WP to WPn (n is an integer value equal to or larger than 1) of the wall surface W during movement in a space near the wall surface W. Further, the distance detection unit 101 detects each distance D1 to Dm (m is an integer value equal to or larger than 1) to at least one predetermined position PP1 to PPm (m is an integer value equal to or larger than 1), of the surface of a pipeline P as illustrated in FIG 9 to FIG 13 described later. When it is not necessary to individually distinguish the predetermined positions WP to WPn from each other, the predetermined positions WP to WPn are collectively referred to as the "predetermined position WP". Further, when the "predetermined position WP" or "predetermined position PP" are referred to, the distance D1 to Dn is also collectively referred to as "distance D".

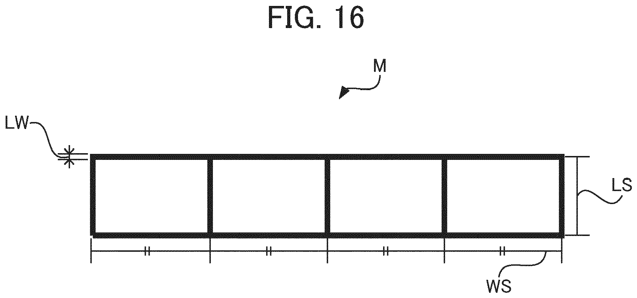

A technique for the distance detection unit 101 to detect the distance D is not particularly limited. For example, the distance D may be detected based on a difference between position information of the predetermined position WP or the predetermined position PP and position information of the device itself obtained from the GPS satellite G, or the distance D may be detected based on image information obtained from images captured by the image capture unit 13 described later. Specifically, the distance detection unit 101 may detect the distance D by estimating the position of the device itself based on the image information obtained from captured images of markers M installed at the predetermined position WP or the predetermined position PP, for example. A flight control technique of the drone 1 using the marker M is described later with reference to FIG. 16. Further, the distance detection unit 101 may detect the distance D to the predetermined position WP or the predetermined position PP using a distance sensor S. As sensors adaptable as the distance sensor S, various commonly used sensors, such as a sensor detecting the distance by a triangulation system, a sensor detecting the distance utilizing radio waves of a microwave band, and a sensor detecting the distance using ultrasonic waves, can be mentioned. Details of a distance detection technique using the distance sensor S are described later with reference to FIG 3 to FIG 13.

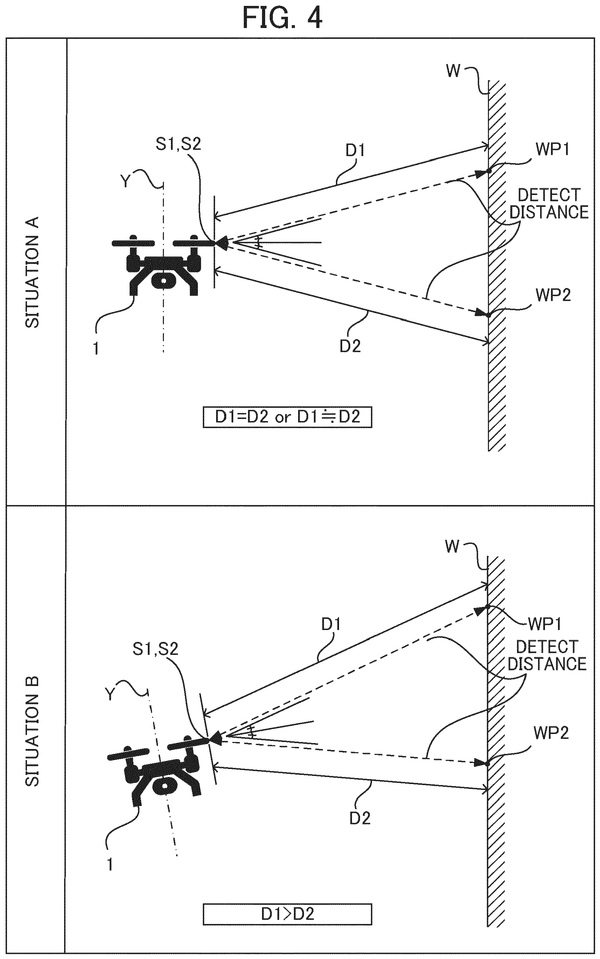

The orientation detection unit 102 detects the orientation of the drone 1 based on each distance D to the at least one predetermined position WP or PP detected. Herein, the phrase "orientation of the drone 1" means the vertical orientation of the drone 1 or the horizontal orientation of the drone 1. A technique for the orientation detection unit 102 to detect the orientation of the drone 1 is not particularly limited. For example, the orientation of the drone 1 may be detected by emitting two light beams different in emission angle from distance sensors S1 and S2 to the predetermined positions WP1 and WP2 from the drone 1, and then evaluating and calculating reflected light beams of the two light beams. Further, although not illustrated, the orientation of the drone 1 may be detected by emitting a light beam in a different direction by each of three distance sensors provided to the drone 1, and then evaluating and calculating reflected light beams. In this case, the drone 1 moves in a three-dimensional space, and therefore the orientation of the drone 1 can be detected with higher accuracy in the case of using the three distance sensors than in the case of using the two distance sensors. Further, the orientation of the drone 1 may be detected combining other sensors, such as a gravity sensor, with one or two distance sensor S without using the three distance sensors S1 to S3. Details of a technique to detect a vertical orientation of the drone 1 by the orientation detection unit 102 are described later with reference to FIG 4 and

FIG 5.

The shortest distance calculation unit 103 calculates the shortest distance from the drone 1 to the surface of the object based on the distance detected. Specifically, as illustrated in FIG 3 to FIG 8 described later, a shortest distance SD from the drone 1 to the surface of the object is calculated based on the at least one distance D detected by the distance detection unit 101. A calculation means of the shortest distance by the shortest distance calculation unit 103 is not particularly limited. For example, the shortest distance SD may be calculated from a value indicating the orientation of the distance sensor S described later and values of the at least one distance D based on the Pythagorean theorem. Details of a calculation technique of the shortest distance SD by the shortest distance calculation unit 103 are described later with reference to FIG 4, etc.

The flight control unit 104 carries out control of the driving of the drive unit 11 such that at least one distance D of the detected distances D to the at least one predetermined position WP or predetermined position PP is not equal to or less than a predetermined value. This can prevent the drone 1 from contacting the predetermined position WP or the predetermined position PP.

The second communication unit 105 communicates with the drive unit 11, the image capture unit 13 described later, and the first communication unit 14 described later. This enables the flight control unit 104 to carry out control of the driving of the drive unit 11 through the second communication unit 105. Further, the distance detection unit 101 can detect the distance D based on the image information based on an image of the marker M captured by the image capture unit 13. Further, the second communication unit 105 can exchange various kinds of information between the second communication unit 105 and the first communication unit 14. Therefore, by retrofitting the flight control module 12 to a conventional drone, the conventional drone can be utilized as the drone 1. Communication means between the second communication unit 105 and the first communication unit 14 are not particularly limited. For example, wireless communication typified by a Wi-Fi (registered trademark), a Bluetooth (registered trademark), and the like may be used, or wired communication using a USB (Universal Serial Bus) and the like may be used.

The deterioration detection unit 106 acquires information including a driving situation of the drive unit 11 as feedback information, and then detects deterioration of the drive unit 11 based on the feedback information. A specific function of the deterioration detection unit 106 is described in detail in the sixth embodiment described later.

The image capture unit 13 contains a camera (not illustrated) or the like and captures an image around the drone 1. The image capture unit 13 captures an image of a portion to be inspected of the wall surface W of a dam or a building, the markers M installed at the predetermined position WP or the predetermined position PP, and the like, for example. Image information of the portion to be inspected of the wall surface W among the image information based on the image captured by the image capture unit 13 serves as information required in determining whether abnormalities occur in the wall surface W. Therefore, the image information of the portion to be inspected of the wall surface W is preferably more detailed information. In order to make the image information more detailed, it is important that the image captured by the image capture unit 13 is free from distortions or the like. The distance sensor S provided in the drone 1 allows attachment of a gimbal. Therefore, a state in which the image capture unit 13 always faces the portion to be inspected of the wall surface W, for example, can also be maintained using the distance sensor S including the gimbal. Thus, the image capture unit 13 can prevent the occurrence of distortions or the like in an image to be captured, and therefore the image can be made information more detailed. The image information of the portion to be inspected of the wall surface W is transmitted to the pilot terminal 2 through the first communication unit 14 described later. The image information of the marker M among the image information based on the image captured by the image capture unit 13 serves as information required for the detection of the distance D by the distance detection unit 101. Therefore, the image information of the marker M is transmitted to the distance detection unit 101 through the second communication unit 105.

The first communication unit 14 communicates with the second communication unit 105, the pilot terminal 2, Wi-Fi (registered trademark) spot and the like K, an information transceiver 4, a radio wave device 5, and another drone R. The first communication unit 14 can exchange various kinds of information between the first communication unit 14 and the second communication unit 105. Therefore, by retrofitting the flight control module 12 to a conventional drone, the conventional drone can be utilized as the drone 1, for example. Further, the first communication unit 14 can exchange various kinds of information with the pilot terminal 2, the Wi-Fi (registered trademark) spot and the like K, the information transceiver 4, the radio wave device 5, and the other drone 1. Therefore, the pilot U can control the drone 1 by operating the pilot terminal 2, for example.

The sample storage section 15 stores a collected water sample L inside the drone 1.

FIG 3 is an image view illustrating a state in which the drone 1 including one distance sensor flies in the space near the wall surface W.

The drone 1 detects the distance D from the drone 1 to the predetermined position WP of the wall surface W while flying in the space near the wall surface W. In the example of FIG. 3, the distance sensor S of the distance detection unit 101 transmits ultrasonic waves and the like toward the predetermined position WP of the wall surface W, and then evaluates and calculates reflected waves of the ultrasonic waves and the like, thereby detecting the distance D. Then, the drone 1 controls the driving of the drive unit 11 such that the distance D is not equal to or less than a predetermined value.

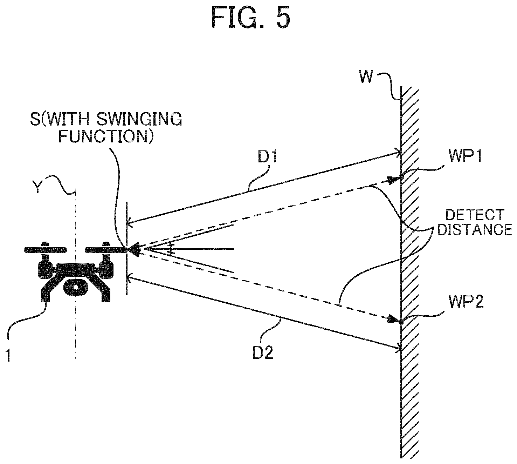

In situation A illustrated in FIG 3, when a virtual center axis Y of the drone 1 and the wall surface W are parallel or substantially parallel to each other, the ultrasonic waves and the like transmitted from the distance sensor S travel perpendicularly or substantially perpendicularly to the wall surface W. Therefore, the distance D to be detected is equal or substantially equal to the shortest distance SD between the drone 1 and the predetermined position WP. Whereas, in situation B illustrated in FIG 3, when the virtual center axis Y of the drone 1 and the wall surface W are not parallel or not substantially parallel to each other, the ultrasonic waves and the like transmitted from the distance sensor S travel in a direction different from the direction perpendicular or substantially perpendicular to the wall surface W. Therefore, the distance D1 to be detected is longer than the actual shortest distance SD between the drone 1 and the predetermined position WP. As a result, the drone 1 may excessively approach the predetermined position WP, causing a risk of contact or collision. A technique of solving such a problem is described with reference to FIG 4 and FIG 5.

FIG 4 is an image view illustrating a state in which the drone 1 including two distance sensors flies in the space near the wall surface W.

In the example illustrated in FIG 4, the drone 1 is configured so that distance sensors S1 and S2 of the distance detection unit 101 transmit ultrasonic waves and the like toward the predetermined positions WP1 and WP2 of the wall surface W, and then evaluate and calculate reflected waves of the ultrasonic waves and the like, thereby detecting the distances D1 and D2, respectively. At this time, the distance sensors S1 and S2 are disposed such that the angle of the ultrasonic waves transmitted from the distance sensor S1 and the angle of the ultrasonic waves transmitted from the distance sensor S2 are the same. Therefore, in the case of Distance D1 = Distance D2 or Distance D1 ≈ Distance D2 in situation A illustrated in FIG 4, the vertical orientation of the drone 1 is perpendicular or substantially perpendicular to the wall surface W. Whereas, when Distance D1 > Distance D2 is established in situation B illustrated in FIG 4, the vertical orientation of the drone 1 is directed slightly upward to the wall surface W. Thus, the use of the above-described technique can facilitate the detection of the vertical orientation of the drone 1.

Further, the drone 1 can estimate the shortest distance SD between the device itself and the wall surface W by detecting the vertical orientation of the drone 1. Specifically, in the situation A illustrated in FIG 4, when the vertical orientation of the drone 1 is perpendicular or substantially perpendicular to the wall surface W, the shortest distance calculation unit 103 can also calculate the shortest distance SD as a value equivalent to the height of an isosceles triangle having the distance D1 and the distance D2 as two sides, for example. This enables the drone 1 to estimate the shortest distance SD between the device itself and the wall surface W. Whereas, in the situation B illustrated in FIG 4, when the vertical orientation of the drone 1 is not perpendicular to the wall surface W but is directed slightly upward to the wall surface W, Distance D1 > Distance D2 is established. Therefore, the drone 1 corrects the vertical orientation of the device itself to be perpendicular to the wall surface W. Thus, the shortest distance SD can be calculated. Specifically, the flight control unit 104 carries out control of the vertical orientation of the device itself such that Distance D1 = Distance D2 or Distance D1 ≈ Distance D2 is established. The shortest distance calculation unit 103 calculates the shortest distance SD equivalent to the height of an isosceles triangle having the distance D1 and the distance D2 as two sides newly detected by the distance detection unit 101, for example. More specifically, the drone 1 determines that the device itself is directed upward to the wall surface W in the case of Distance D1 > Distance D2 and determines that the device itself is directed downward to the wall surface W in the case of Distance D1 < Distance D2. Then, the drone 1 controls the vertical orientation of the device itself such that Distance D1 = Distance D2 or Distance D1 ≈ Distance D2 is established, and then calculates the shortest distance SD. Thus, the drone 1 can easily estimate the shortest distance SD only by detecting the distances D1 and D2 using the two distance sensors S1 and S2, respectively, and then correcting the vertical orientation of the device itself according to the detection results. As a result, the drone 1 can control the flight such that the shortest distance SD between the device itself and the wall surface W is not equal to or less than a predetermined value, and therefore the drone 1 can be prevented from excessively approaching the wall surface W to contact or collide with the wall surface W.

In the example illustrated in FIG 4, the drone 1 has detected the vertical orientation of the drone 1 from the distances D1 and D2 detected by the two distance sensors S1 and S2, respectively, and then estimated the shortest distance SD. Next, a technique for the drone 1 to detect the vertical orientation of the device itself using only one distance sensor S and estimate the shortest distance SD is described with reference to FIG 5.

FIG 5 is an image view illustrating a state in which the drone 1 including one distance sensor S having a swinging function flies in the space near the wall surface W.

The drone 1 illustrated in FIG 5 includes the distance sensor S having a swinging function. Thus, the drone 1 first transmits ultrasonic waves and the like from the distance sensor S to the predetermined position WP1, and then evaluates and calculates reflected waves of the ultrasonic waves and the like, thereby detecting the distance D1 in a state of hovering in the space near the wall surface W. Next, the drone 1 changes only the vertical orientation of the distance sensor S, transmits ultrasonic waves and the like from the distance sensor S to a predetermined position WP2, and then evaluates and calculates reflected waves of the ultrasonic waves and the like, thereby detecting the distance D2. When the detection result is Distance D1 = Distance D2 or Distance D1 ≈ Distance D2, the vertical orientation of the drone 1 is perpendicular or substantially perpendicular to the wall surface W. Then, the shortest distance SD equivalent to the height of an isosceles triangle having the distance D1 and the distance D2 as two sides is calculated. Whereas, when Distance D1 > Distance D2 is established or when Distance D1 < Distance D2 is established, the vertical orientation of the drone 1 is not perpendicular to the wall surface W. Therefore, the drone 1 controls the vertical orientation of the device itself such that Distance D1 = Distance D2 or Distance D1 ≈ Distance D2 is established, and then calculates the shortest distance SD equivalent to the height of an isosceles triangle having the distance D1 and the distance D2 as two sides. Thus, simply by providing the drone 1 with the one distance sensor S having a swinging function, the drone 1 can detect the vertical orientation of the device itself, and then calculate and estimate the shortest distance SD from the device itself to the wall surface W.

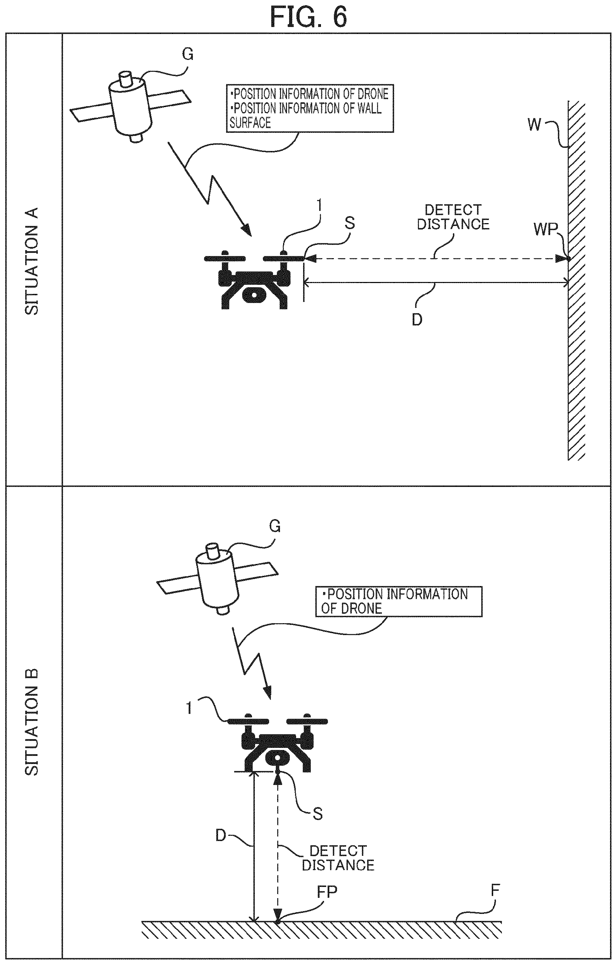

Next, a technique of performing flight control based on the position information obtained from the GPS satellite G is described with reference to FIG. 6. FIG 6 is an image view illustrating an example of controlling the flight of the drone 1 based on the position information obtained from the GPS satellite G

In situation A illustrated in FIG 6, the drone 1 acquires the position information of the device itself and the position information of the wall surface W from the GPS satellite G, and then detects the distance D based on a difference between the two position information. Thus, the drone 1 can control the flight such that the distance D between the device itself and the wall surface W is not equal to or less than a predetermined value, and therefore the drone 1 can be prevented from excessively approaching the wall surface W to contact or collide the wall surface W. However, an error occurs in the position information obtained from the GPS satellite G in many cases. In particular, the wall surface W may block a GPS signal in some cases, causing a risk of increasing the error. Therefore, the drone 1 detects the distance D between the device itself and the predetermined position WP of the wall surface W using the distance sensor S to control the flight such that the distance D is not equal to or less than a predetermined value in the situation A illustrated in FIG. 6. Thus, the drone 1 can control the flight such that the distance D between the device itself and the wall surface W is not equal to or less than a predetermined value, and therefore the drone 1 can be prevented from excessively approaching the wall surface W to contact or collide with the wall surface W.

From the position information obtained from the GPS satellite G, the distance D (height) between the drone 1 and a ground F cannot be acquired with high accuracy. Therefore, in situation B illustrated in FIG 6, the drone 1 detects the distance D between the device itself and a predetermined position FP on the ground F using the distance sensor S to control the flight such that the distance D is not equal to or less than a predetermined value. This enables the drone 1 to control the flight such that the distance D between the device itself and a predetermined position FP on the ground F is not equal to or less than a predetermined value. As a result, the drone 1 can be prevented from excessively approaching the wall surface W or the ground F to contact or collide with, for example, the wall surface W or the ground F.

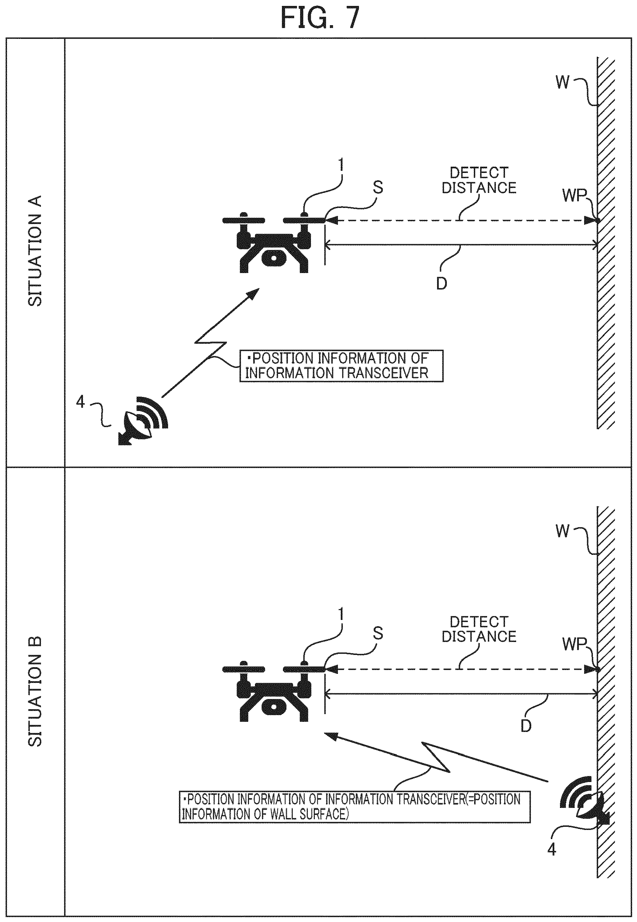

Next, a technique of performing the flight control of the drone 1 without utilizing the position information obtained from the GPS satellite G is described with reference to FIG 7. FIG 7 is an image view illustrating an example of controlling the flight of the drone 1 based on information obtained from the information transceiver 4.

In situation A illustrated in FIG 7, the information transceiver 4 transmits and receives various kinds of information in a state of being installed at a predetermined position on the ground or in space. When the information transceiver 4 is separated apart from the wall surface W, a transmission/reception state thereof is improved. Therefore, when the information transceiver 4 is placed on the ground, the information transceiver 4 is installed at a position with a height of about 1 m with a tripod or the like. When the inspection of a dam is performed using the information transceiver 4, the information transceiver 4 is installed to horizontally project by about 1 m from the top of the wall surface of the dam with a stick or the like. In situation A illustrated in FIG. 7, the information transceiver 4 transmits position information of the device itself stored in advance. The drone 1 acquires the position information of the information transceiver 4 transmitted from the information transceiver 4. Thus, the drone 1 is present at least within a reachable range of radio waves and the like transmitted from the information transceiver 4, and therefore the drone 1 can estimate an approximate position of the device itself. Therefore, in order for the drone 1 to estimate the position of the device itself with higher accuracy based on the information obtained from the information transceiver 4, the number of the information transceivers 4 installed on the ground or in space is preferably larger and the reachable range of radio waves and the like transmitted from the information transceiver 4 is preferably narrower.

The information transceiver 4 can be installed on the wall surface W as described above. Therefore, in situation B illustrated in FIG 7, the information transceiver 4 transmits and receives various kinds of information in a state of being installed on the wall surface W. In this case, the drone 1 acquires the position information of the information transceiver 4 transmitted from the information transceiver 4 installed on the wall surface W (position information of the wall surface W). This enables the drone 1 to estimate that the device itself is present at least within the reachable range of radio waves and the like transmitted from the information transceiver 4 installed on the wall surface W. Thus, by utilizing the information obtained from the information transceiver 4, the drone 1 can estimate the position of the device itself without obtaining the position information from the GPS satellite G. It is a matter of course that the position of the device itself can be estimated with higher accuracy by adding various kinds of information, such as the position information obtained from the GPS satellite G and the distance D obtained from the distance sensor S.

Further, the marker M or the like may be installed on the ground instead of installing the information transceiver 4. This enables the drone 1 to estimate the position of the device itself based on the image information obtained from the captured image of the marker M.

Further, the information transceiver 4 and the marker M may be mounted not only on the ground but on the drone 1. When the information transceiver 4 is mounted on the drone 1, the information transceiver 4 of the drone 1 can transmit a request signal to the information transceiver 4 on the ground. The information transceiver 4 on the ground receiving the request signal can transmit position information of the information transceiver 4 on the ground while being superimposed on a signal indicating that the request signal has been received. This enables the drone 1 to acquire the position information of the information transceiver 4 on the ground, and therefore position of the device itself can be estimated the from the position information.

When the marker M is mounted on the drone 1, the information transceiver 4 installed on the ground or in space may capture an image of the marker M of the drone 1 with a camera (not illustrated) or the like, and then calculate the position information of the drone 1 based on image information obtained from the captured image of the marker M and the position information of the device itself. The position information of the drone 1 obtained as the calculation result may be transmitted to the drone 1 while being superimposed on radio waves and the like transmitted by the information transceiver 4. A specific technique for the drone 1 to estimate the position of the device itself based on the image information obtained from the captured image of the marker M and the like is described later with reference to FIG. 16.

Further, the information processing system to which the present invention is applied is not limited to the first embodiment described above and can take various kinds of embodiments having the following configurations. More specifically, the information processing system to which the present invention is applied includes a moving body (for example, drone 1 of FIG 1) having a drive means (for example, drive unit 11 of FIG 2) for moving in space, in which the moving body includes: a distance detection means (for example, distance detection unit 101 of FIG. 2) that detects a distance to at least one predetermined position (for example, predetermined position WP of FIG 3) of the surface of an object (for example, wall surface W of FIG 3) during movement in the space near the object; a shortest distance calculation means (for example, shortest distance calculation unit 103 of FIG. 2) that calculates the shortest distance from the moving body to the surface of the object based on the distance detected; and a drive control means (for example, flight control unit 104 of FIG. 2) that carries out control of the driving of the drive means such that the shortest distance is not equal to or less than a predetermined value. This enables the drone 1 to prevent the device itself from excessively approaching the wall surface W or the ground F to contact or collide with, for example, the wall surface W or the ground F.

Further, the distance detection means can detect the distance based on image information obtained from the captured images of the at least one predetermined position. This enables the drone 1 to prevent the device itself from excessively approaching the wall surface W or the ground F to contact or collide with, for example, the wall surface W or the ground F with high accuracy.

Further, an orientation detection means (for example, orientation detection unit 102 of FIG. 2) that detects the orientation of the moving body based on at least one distance detected can be further provided. The drive control means can further carry out control of the driving of the drive means such that at least one distance of the distance is not equal to or less than a predetermined distance considering the direction. This enables the drone 1 to prevent the device itself from excessively approaching the wall surface W or the ground F to contact or collide with, for example, the wall surface W or the ground F with higher accuracy.

### [Second embodiment]

### (Self-position estimation utilizing relay drone)

In the industry of robots including drones, a technique capable of efficiently estimating a self-position has been demanded. As conventional techniques, there are a technique of acquiring position information from the GPS satellite G and a technique of recognizing a self-position using radio waves, laser scanning, motion capture, or the like, for example. However, the position information acquired from the GPS satellite G has a problem of accuracy. According to most techniques, the marker M or the information transceiver 4 installed on the ground or in space estimates a self-position utilizing a relative position to a flying drone or a relative position to the GPS satellite G These techniques also have a problem of accuracy. In particular, in the vicinity of the wall surface W of a dam or a building, a GPS signal is blocked by the wall surface W in some cases, and therefore it is very difficult for the drone 1 to estimate the position of the device itself. Therefore, new techniques capable of efficiently estimating the position of the device itself have been particularly demanded.

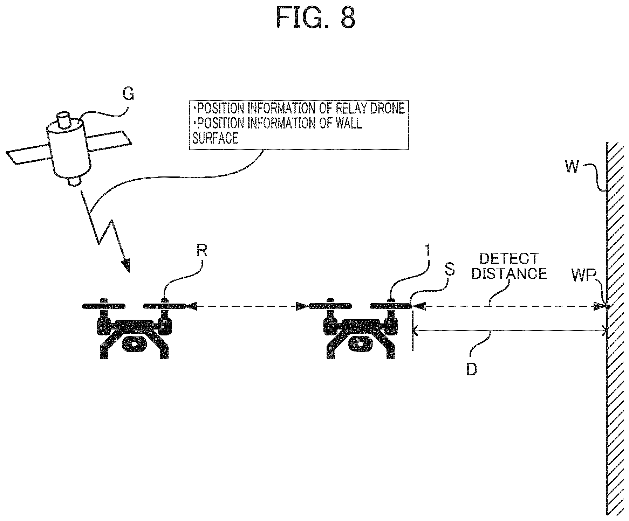

An information processing system of a second embodiment is a system realizing such a request and provides a new technique enabling the drone 1 to efficiently estimate the position of the device itself. Hereinafter, the information processing system of the second embodiment is described with reference to FIG 8.

FIG 8 is an image view illustrating a state in which the working drone 1 flies near the wall surface W while estimating the position of the device itself utilizing the relay drone R.

The relay drone R includes at least a position acquisition unit 601 acquiring information on the position of the device itself and a communication unit 602 transmitting the acquired information on the position of the device itself as first moving body position information as illustrated in FIG 2. In an example illustrated in FIG 8, the drone R flies in a position where a GPS signal is easily received and a communication environment between the drone R and the working drone 1 is also good. The working drone 1 performs inspection work of the wall surface W while hovering in the space near the wall surface W where a GPS signal is difficult to receive. The drone R transmits position information of the device itself and position information of the wall surface W among position information obtained from the GPS satellite G to the drone 1. The drone 1 acquires the position information of the drone R and the position information of the wall surface W transmitted from the drone R, and then estimates the position of the device itself and the shortest distance SD based on the position information. More specifically, the drone 1 estimates the position of the device itself based on the position information of the drone R transmitted from the drone R. Then, the drone 1 estimates the shortest distance SD based on the estimated position of the device itself and the acquired position information of the wall surface W. This enables the drone 1 to safely perform the inspection work of the wall surface W without excessively approaching the wall surface W. Further, the drone R may estimate the position of the drone 1 and the shortest distance SD based on the position information of the device itself and the position information of the wall surface W. More specifically, radio waves used for the distance measurement and radio wave used for the communication are not required to be the same radio waves.

A technique for the drone 1 to estimate the position of the device itself based on the position information of the drone R is not particularly limited. For example, the positional relationship between the drone 1 and the drone R is set to be always constant, and then the position of the drone 1 may be estimated based on the position information of the drone R. A technique of setting the positional relationship between the drone 1 and the drone R to be always constant is also not particularly limited. The positional relationship therebetween may be maintained by observing the drone R from the drone 1 or the positional relationship therebetween may be maintained by observing the drone 1 from the drone R.

The position of the drone R may not always be based on the position information obtained from the GPS satellite G For example, image information obtained from images of the marker M and the like captured by the drone R or the information transceiver 4 transmitting and receiving various kinds of information may be used. Further, surveying instruments, such as a total station, may be used. Thus, even when it is difficult to install the marker M, the information transceiver 4, and the like, so that the drone 1 cannot estimate the position of the device itself, the drone 1 can easily estimate the position of the device itself from the position of the relay drone R. It is a matter of course that the drone 1 can estimate the position of the device itself with higher accuracy by adding various kinds of information, such as the distance D obtained from the distance sensor S.

Further, even when the position of the drone 1 is located at a position where a GPS signal can be received, the drone R can be effectively utilized. For example, the position information acquired by two drones, the drone 1 and the drone R, may be utilized. This can further improve the accuracy of the estimation of the position of the device itself by the drone 1. For example, in the case of performing large-scale inspection work in which a group containing a plurality of the drones 1 simultaneously perform the inspection work of the wall surface W, the accuracy of estimating each position of the plurality of the drones 1 can be further improved by utilizing the position information acquired by the plurality of the drones 1.

Further, the information processing system to which the present invention is applied is not limited to the second embodiment described above and can take various kinds of embodiments having the following configurations. More specifically, the information processing system to which the present invention is applied is an information processing system comprising a plurality of moving bodies (for example, drone 1 of FIG 1 and relay drone R of FIG 8) having a drive means (for example, drive unit 11 of FIG. 2) for moving in space, in which the information processing system includes: a first moving body (for example, relay drone R of FIG 8) including an acquisition means (for example, position acquisition unit 601 of FIG 2) that acquires information on the position of the device itself, and a transmission means (for example, communication unit 602 of FIG 2) that transmits the acquired information as first moving body position information; and a second moving body (for example, working drone 1 of FIG 8) including an acquisition means (for example, first communication unit 14 of FIG 2) that acquires the first moving body position information, a shortest distance calculation means (for example, shortest distance calculation unit 103 of FIG 2) that calculates the shortest distance from the device itself to the surface of an object based on the first moving body position information during movement in the space near the object, and a drive control means (for example, flight control unit 104 of FIG 2) that carries out control of the driving of the drive means such that the shortest distance is not equal to or less than a predetermined value. Thus, even when the drone 1 flies in a position where it is difficult for the drone 1 to estimate the self-position, such as the wall surface W of a dam or a building or a bridge, for example, the drone 1 can easily estimate the self-position.

### [Third embodiment]

### (Flight control in pipeline)

Conventionally, there are control techniques for the flight of a drone and independent operation of robots in a cylindrical semi-closed space, such as sewer pipelines, rain water drainpipes, water pipes of dams, and chemical plant pipelines. However, new techniques for efficiently performing the control of the flight of unmanned aircrafts and the independent operation of robots in the cylindrical semi-closed space have been demanded.

The information processing system of the third embodiment is a system realizing such a request and provides a new technique for efficiently performing the control of the flight of a drone and the independent operation of robots in the cylindrical semi-closed space. Hereinafter, the information processing system of the third embodiment is described with reference to FIG 9 to FIG. 13.

FIG 9 is a cross-sectional image view illustrating a state in which the drone 1 flies in a pipeline P.

As illustrated in FIG. 9, distance sensors S1 and S2 for detecting the distances D1 and D2 from the drone 1 to the predetermined positions PP1 and PP2, of the inner wall surface of the pipeline P are mounted on upper end sections of the drone 1, respectively. Further, distance sensors S3 and S4 for detecting distances D3 and D4 from the drone 1 to predetermined positions PP3 and PP4 of the inner wall surface of the pipeline P are mounted on lower end sections of the drone 1, respectively. The drone 1 detects the distance D1 between the device itself and the predetermined position PP1 and the distance D2 between the device itself and the predetermined position PP2 and flies in the pipeline P while maintaining a state in which Distance D1 = Distance D2 is established or a state in which Distance D1 :Distance D2 is a fixed ratio. Although not illustrated, the distance sensors S for detecting the distance from the drone 1 to the inner wall surface of the pipeline P are mounted also on both side end sections of the drone 1, respectively. The drone 1 flies in the pipeline P while detecting the distance from the distance sensors S mounted on both side surfaces of the device itself to the inner wall surface of the pipeline P, as with the distance sensors S1 and S2 mounted on the upper end section and the lower end section, respectively. This enables the drone 1 to avoid contacting or colliding with the inner wall of the pipeline P during the flight.

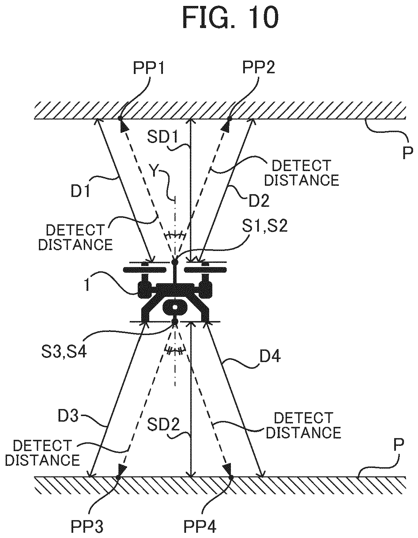

When the vertical orientation of the drone 1 is parallel to the longitudinal direction of the pipeline P as illustrated in FIG 9, ultrasonic waves transmitted from the distance sensors S are transmitted perpendicularly to the surface of the pipeline P. Therefore, the distance D1 to be detected will be the shortest distance SD between the drone 1 and the predetermined position PP1. Similarly, the distance D2 to be detected will also be the shortest distance SD between the drone 1 and the predetermined position PP2. Whereas, when the drone 1 does not fly such that the vertical orientation of the drone 1 is horizontal to the longitudinal direction of the pipeline P, ultrasonic waves transmitted from the distance sensors S are transmitted in a direction not perpendicular to the surface of the pipeline P as with the situation B illustrated in FIG 3. Thus, the distance D1 or the distance D2 to be detected is longer than the actual shortest distance between the drone 1 and the inner wall surface of the pipeline P. Therefore, there is a risk that the drone 1 may excessively approach the inner wall of the pipeline P to contact or collide with the inner wall of the pipeline P. A technique of solving such a problem is described with reference to FIG 10 to FIG 12.

FIG 10 is across-sectional image view illustrating a state in which the drone 1 including the distance sensors S flies in the pipeline P. Although not illustrated, the distance sensors S for detecting the distance from the drone 1 to the inner wall surface of the pipeline P are mounted also on both the side end sections of the drone 1, respectively.

In the example illustrated in FIG 10, the drone 1 is configured so that the distance sensors S1 and S2 of the distance detection unit 101 (FIG 2) transmit ultrasonic waves and the like toward the predetermined positions PP1 and PP2, respectively, of the inner wall surface of the pipeline P, and then evaluate and calculate reflected waves of the ultrasonic waves and the like, thereby detecting each of the distances D1 and D2. At this time, the angle of the ultrasonic waves and the like transmitted from the distance sensor S1 and the angle of the ultrasonic waves and the like transmitted from the distance sensor S2 are set to be the same. Therefore, when Distance D1 = Distance D2 or Distance D1 ≈ Distance D2 is established, the vertical orientation of the drone 1 is parallel or substantially parallel to the inner wall surface of the pipeline P. Whereas, although not illustrated, when Distance D1 > Distance D2 is established or when Distance D1 > Distance D2 is established, the vertical orientation of the drone 1 is not parallel or not substantially parallel to the inner wall surface of the pipeline P but is tilted. The use of such a technique enables the drone 1 to estimate the vertical orientation of the device itself flying in the pipeline P. Although the cross-sectional shape of the pipeline P is a cylindrical shape or a rectangular shape, the relationship between both the side end sections of the drone 1 and the inner wall surface of the pipeline P is also the same as the relationship between the upper and lower end sections of the drone 1 and the inner wall surface of the pipeline P. More specifically, the distance sensors S (not illustrated) mounted on both the side end sections of the drone 1 transmit ultrasonic waves and the like toward the predetermined positions PP of the inner wall surface of the pipeline P to detect the distance D to the inner wall surface of the pipeline P (not illustrated) from both the side end sections of the drone 1, respectively. This enables the drone 1 to estimate the horizontal orientation of the device itself flying in the pipeline P.

Since the drone 1 is mounted with the plurality of distance sensors S, the drone 1 can calculate a shortest distance SD1 between the drone 1 and the upper inner wall surface of the pipeline P and a shortest distance SD2 between the drone 1 and the lower inner wall surface of the pipeline P simultaneously with the detection of the orientation of the device itself flying in the pipeline P. Specifically, when the vertical orientation of the drone 1 is perpendicular or substantially perpendicular to the inner wall surface of the pipeline P as with the situation A illustrated in FIG 4, the shortest distance SD1 may be calculated as a value equivalent to the height of an isosceles triangle having the distance D1 and the distance D2 as two sides, for example. Further, the drone 1 may calculate the shortest distance SD2 as a value equivalent to the height of an isosceles triangle having the distance D3 and the distance D4 as two sides as with the case of the shortest distance SD1. From such calculation results, the drone 1 can easily estimate the shortest distances SD1 and SD2.

Although not illustrated, when the orientation of the drone 1 is oriented upward or downward, Distance D1 > Distance D2, Distance D3 < Distance D4 or Distance D1 < Distance D2, Distance D3 > Distance D4 is established as with the situation B illustrated in FIG 4. In this case, the drone 1 corrects the direction such that the orientation of the device itself is perpendicular to the inner wall surface of the pipeline P. This enables the drone 1 to calculate the shortest distances SD1 and SD2. As a result, the drone 1 can easily estimate the shortest distances SD1 and SD2.

Further, the relationship between both the side end sections of the drone 1 and the inner wall surface of the pipeline P is the same as the relationship between the upper and lower end sections of the drone 1 and the inner wall surface of the pipeline P. More specifically, the plurality of distance sensors S (not illustrated) mounted on both the side end sections of the drone 1 transmit ultrasonic waves and the like toward the plurality of predetermined positions PP of the inner wall surface of the pipeline P, and then evaluate and calculate reflected waves of the ultrasonic waves and the like, thereby detecting the distances D, respectively. This enables the drone 1 to estimate the horizontal orientation of the device itself flying in the pipeline P. Furthermore, the drone 1 calculates the shortest distance SD between the drone 1 and both side inner wall surfaces of the pipeline P as with the case of the shortest distance SD1 from the device itself to the upper wall surface of the pipeline P and the shortest distance SD2 from the device itself to the lower wall surface of the pipeline P. This enables the drone 1 to easily estimate the shortest distance SD between the drone 1 and both the side inner wall surfaces of the pipeline P.

Thus, the drone 1 detects the distance D from the drone 1 to the plurality of predetermined positions PP using the plurality of the distance sensors S, respectively, and corrects the orientation of the device itself according to the detection results, and therefore the shortest distance SD can be easily calculated. Thus, the drone 1 can control the flight while maintaining a fixed distance such that the shortest distance SD between the device itself and the wall surface W is not equal to or less than a predetermined value, and therefore the drone 1 can be prevented contact or collision caused by excessive approaching to the wall surface W. The technique described above enables the drone 1 to control the flight while maintaining the fixed distance such that the shortest distance SD between the device itself and the wall surface W is not equal to or less than a predetermined value not only in a linear section of the pipeline P but in a branch section or a joining section.

Further, in FIG 9 and FIG 10, the distance sensors S1 and S2 of the drone 1 detect the distances D1 and D2 in the opposite directions on the same straight line; however, the directions are not particularly limited thereto. Specifically, the distance sensor S may be provided at a position where the distance between a body and a wall surface parallel or substantially parallel to the movement direction of the body, for example. Thus, it can be detected that the direction (movement direction) of a route of the drone 1 has changed or has deviated from an ideal course, for example, or that an obstacle is present in the direction of a route in advance.

Further, the drone 1 can keep a safe position even when some of the plurality of distance sensors S cannot detect the distance D. As described above, in the case of FIG 9, the drone 1 can estimate the vertical orientation of the device itself flying in the pipeline P based on a comparison between the two distances D1 and D2, for example. However, when the drone 1 is located in a place where pipelines join or a place where a lid of a pipeline is removed, so that the sky can be seen, reflected waves of ultrasonic waves and the like transmitted from the distance sensors S cannot be obtained in some cases. More specifically, when the drone 1 including the distance sensors S1 and S2 in the upper section and the lower section, respectively, illustrated in FIG 9 is located in the place where the lid of the pipeline is removed, so that the sky can be seen, for example, the drone 1 cannot detect the distance D1. In such a case, the drone 1 can keep the safe position based on the distance D2. Specifically, the drone 1 can keep the safe position by setting the permissible maximum value of the distance D2, and then moving so as not to exceed the maximum value of the distance D2, for example. More specifically, in the example of FIG 9, the drone 1 sets the maximum value of the distance D2 in order to detect the distances D1 and D2 in the opposite directions on the same straight line, thereby correspondingly setting the minimum value of the distance D1. Further, for example, the drone 1 can set the maximum value of the distance D2 based on the angle between the distances D and the distance D2 detected by the plurality of distance sensors S or the shape of the pipeline. More specifically, even when some of the plurality of distance sensors S cannot detect the distance D, the drone 1 can keep the safe position by performing control such that the distance D detected by another distance sensor S falls within a predetermined range.

Further, for example, even when the drone 1 is located in the place where the lid of the pipeline is removed, so that the sky can be seen, for example, as described above, the distance sensor S can be provided as described below such that the distance can be calculated. Specifically, the distance can be calculated by providing the distance sensor S having a swinging function possessed by the drone 1 of FIG. 5, for example. More specifically, by providing the distance sensor S having a swinging function in an upper section, the distance sensor S can detect the distance to a position where a lid of a pipeline is not present, for example. Thus, the shortest distance SD above the drone 1 can be calculated. Thus, even when the drone 1 is located in the place where the lid of the pipeline is removed, so that the sky can be seen, for example, the drone 1 can keep the safe position. Further, for example, the drone 1 can include each of the plurality of distance sensors S as a unit in which each of the distances D to be measured forms a small angle. This enables the drone 1 to calculate the shortest distance SD by matching each of the distances D to be measured with a plurality of distance detections of the distance sensors S having a swinging function.

Further, the drone 1 can stably keep a distance from the drone 1 to the vicinity of the wall surface or the wall surface in the pipeline by including the distance sensor S having a swinging function or the unit of the plurality of distance sensors S described above not only in the upper section or the lower section but in arbitrary directions. Further, the drone 1 can increase safety by including two or more of the distance sensors S having a swinging function or the units of the plurality of distance sensors S described above.

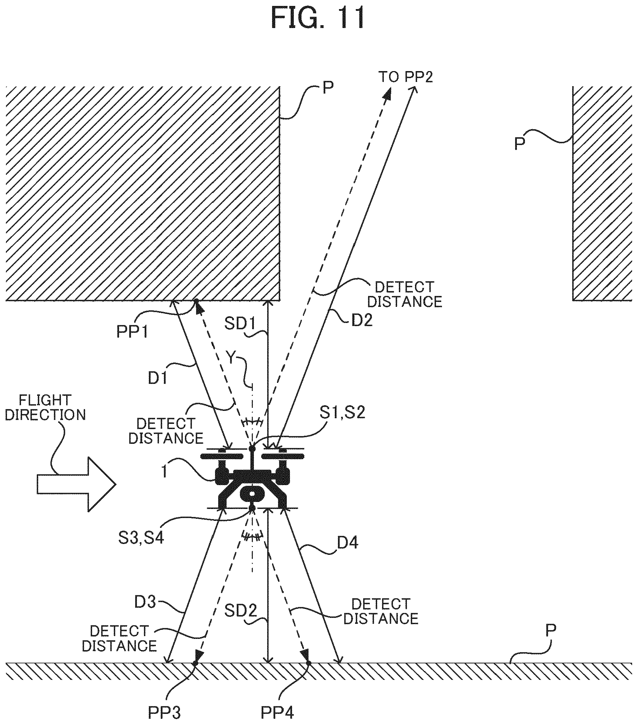

FIG 11 is a cross-sectional image view illustrating a state in which the drone 1 including the distance sensors S is about to fly in a branch section in the pipeline P. Although not illustrated, the distance sensors S for detecting the distance from the drone 1 to the inner wall surface of the pipeline P are mounted also on both the side end sections of the drone 1.

As illustrated in FIG. 11, a set of the two distance sensors S different in angle is disposed at each of an upper end section and a lower end section in the drone 1. Further, although not illustrated, one set is disposed at each of both side surface sections of the drone 1. More specifically, four sets (eight pieces) of the distance sensors S in total are mounted on the surface of the drone 1. Thus, even in a case of the pipeline P surrounded by a wall, the drone 1 can fly while estimating the orientation of the device itself and the shortest distance SD by detecting the distance D from the drone 1 to the inner wall surface. As a result, the drone 1 can safely fly in the pipeline P without colliding with the inner wall surface. In the example of FIG. 11, the four sets (eight pieces) of the distance sensors S in total are mounted but the present invention is not limited thereto. For example, only two sets (four pieces) of the distance sensors S in total may be mounted in the upper end section and a left side surface.

The drone 1 of such a configuration can safely fly without colliding with the inner wall surface while estimating the orientation of the device itself and the shortest distance SD even in a branch section or a joining section as well as in the linear section inside the pipeline P. In the example illustrated in FIG 11, the distance sensors S1 and S2 mounted on the upper end section of the drone 1 detect the distances D1 and D2 to the predetermined positions PP1 and PP2, respectively. Further, the distance sensors S3 and S4 mounted on the lower end section of the drone 1 detect the distances D3 and D4 to the predetermined positions PP3 and PP4, respectively. Further, although not illustrated, the distance sensor S disposed at both the side surface sections of the drone 1 detect the distance D to the predetermined position PP. The drone 1 passes the branch section of the pipeline P without contacting or colliding with the inner wall surface of the pipeline P while estimating the orientation of the device itself and the shortest distance SD based on the plurality of distances D detected as described above. Specifically, when the drone 1 is in the state illustrated in FIG 11, for example, the drone 1 presumes that space is present in the upper right direction and that the orientation of the device itself is parallel to the lower wall surface of the pipeline P from the detection result of Distance D1 < Distance D2 and the detection result of Distance D3 = Distance D4. As a result, the drone 1 can safely pass the branch section while maintaining a fixed distance between the drone 1 and each wall surface without contacting or colliding with each wall surface.

Further, in the description given above, the set of the two distance sensors S different in angle is disposed in each of the upper end section and the lower end section in the drone 1 but the prevent invention is not particularly limited thereto. More specifically, the set of two distance sensors S may be provided only in one direction of the drone 1. When two or more sets of the distance sensors S are provided, the positions where the sets of the distance sensors S are provided are not limited to each of the upper end section and the lower end section. More specifically, the set of the distance sensors S may be provided in two directions other than the opposite directions. Specifically, the set of the distance sensors S may be provided in two directions of the upper end and a certain side surface, for example. In this case, the drone 1 can control the device itself such that the shortest distance SD falls within a predetermined range by estimating the shortest distance SD in the upward direction and one side surface direction. This enables the drone 1 to control the device itself to pass through a designated arbitrary place.

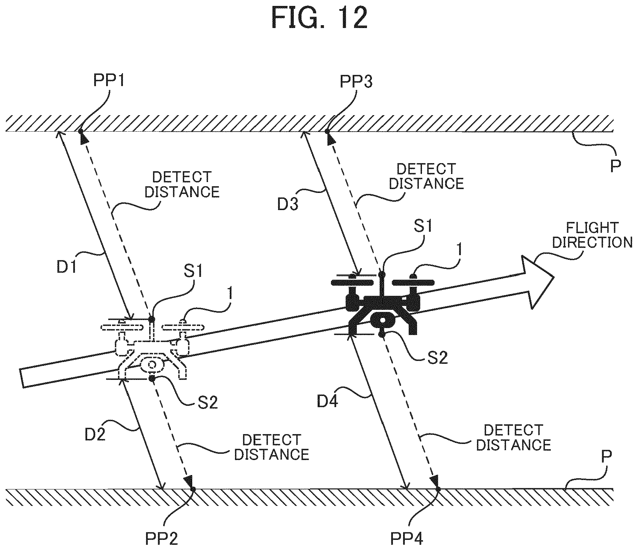

Next, a technique to estimate the orientation of the drone 1 and the shortest distance SD based on variations of the distance D varying over time is described with reference to FIG 12. FIG 12 is a conceptual diagram illustrating a state in which the drone 1 flies in the pipeline P while estimating the orientation of the device itself and the shortest distance SD based on the variations of the distance D varying over time.

As illustrated in FIG. 12, the drone 1 estimates the shortest distance SD and the orientation of the drone 1 based on a difference between the distances to two predetermined positions PP, at different timing for detecting the distance D, for example. Specifically, at timing T1, the drone 1 detects the distance D1 to the predetermined position PP1 and the distance D2 to the predetermined position PP2, for example. Then, at timing T2 which is timing after the timing T1, the drone 1 detects the distance D3 to the predetermined position PP3 and the distance D4 to the predetermined position PP4. In the example illustrated in FIG 12, Distance D1 > Distance D3 or Distance D4 > Distance D2 is established, and therefore the drone 1 estimates that the device itself flies in the upper right direction. At this time, when a time difference between the timing T1 and the timing T2 is large, the flight direction is changed between the timing T1 and the timing T2 in some cases. Therefore, the time difference between the timing T1 and the timing T2 is preferably smaller. By reducing the time difference between the timing T1 and the timing T2 to a limit value, the flight direction of the drone 1 can be more precisely estimated.

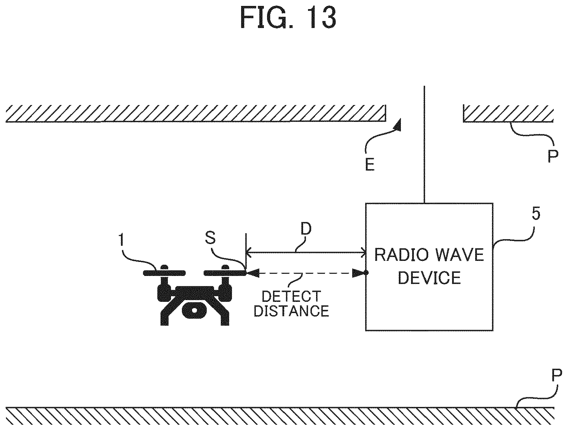

Next, a technique for the drone 1 to estimate the moving distance of the device itself is described with reference to FIG 13. FIG 13 is an image view illustrating a state in which the drone 1 estimates the moving distance of the device itself using the radio wave device 5.

The radio wave device 5 is a radio wave device disposed in the pipeline P and, immediately after receiving a signal transmitted by the drone 1, returns the signal toward the drone 1 transmitting the signal. The drone 1 calculates the distance D between the device itself and the radio wave device 5 based on reciprocating time from the transmission of the signal until the reception of the signal. Thus, the drone 1 can always grasp the positional relationship between the device itself and the radio wave device 5, and therefore the moving distance of the device itself can be easily estimated in the pipeline P. A technique of disposing the radio wave device 5 in the pipeline P is not particularly limited. For example, the radio wave device 5 may be disposed to be suspended from an entrance E of the pipeline P with a wire or the like as in an example illustrated in FIG 13.

A technique of estimating the distance between the drone 1 and the radio wave device 5 is not limited to the technique of estimating the distance based on the reciprocating time of the signal described above. For example, the distance between the drone 1 and the radio wave device 5 may be calculate based on a phase difference between the waveform of a signal transmitted by the drone 1 and the waveform of a signal transmitted by the radio wave device 5. Further, the frequencies of radio waves transmitted by the drone 1 and the radio wave device 5 are not particularly limited. A plurality of frequencies having different bands may be adopted. This enables the drone 1 to easily presume the distance D between the device itself and the radio wave device 5 in the pipeline P having not only the linear section but the branch section or the joining section. Further, position information of the radio wave device 5 obtained from the GPS satellite G may be superimposed on the signal transmitted by the radio wave device 5. This enables the drone 1 to also estimate position information of the device itself together with the distance D between the device itself and the radio wave device 5. As a result, the work efficiency of the drone 1 can be improved.

Further, the information processing system to which the present invention is applied is not limited to the third embodiment described above and can take various kinds of embodiments having the following configurations. More specifically, a moving body (for example, drone 1 of FIG 1) of the information processing system to which the present invention is applied including a drive means for moving in a pipeline (for example, pipeline P of FIG. 9) includes: a distance detection means (for example, distance detection unit 101 of FIG 2) that detects a distance to at least one predetermined position (for example, a predetermined position PP of FIG 9) of the wall surface during movement in a space near an inner wall of the pipeline; a shortest distance calculation means (for example, shortest distance calculation unit 103 of FIG 2) that calculates the shortest distance from the moving body to the wall surface based on the distance detected; and a drive control means (for example, flight control unit 104 of FIG 2) that carries out control of the driving of the drive means such that the shortest distance is not equal to or less than a predetermined value. Thus, the drone 1 can safely fly without colliding with the inner wall of the pipeline P while easily estimating the orientation of the device itself and the shortest distance SD between the device itself and the inner wall of the pipeline P even when the drone 1 flies in the narrow pipeline P surrounded by the wall.

Further, the information processing system to which the present invention is applied is an information processing system comprising a moving body having a drive means for moving in a pipeline and a device (for example, radio wave device 5 of FIG. 13) transmitting and receiving radio waves, in which the moving means includes: a distance detection means that detects a distance from the moving means to at least one predetermined position of the wall surface during movement in a space near an inner wall of the pipeline; a shortest distance calculation means that calculates the shortest distance from the moving body to the wall surface based on the distance detected; a drive control means that carries out control of the driving of the drive means such that the shortest distance is not equal to or less than a predetermined value; a first radio wave transmission means (for example, distance detection unit 101 of FIG 2) that transmits a first radio wave to the substrate; a second radio wave receiving means (for example, distance detection unit 101 of FIG 2) that receives a second radio wave transmitted from the substrate; and a moving distance calculation unit (for example, distance detection unit 101 of FIG 2) that calculates the moving distance between the device itself and the device based on the first radio wave and the second radio wave, and the device includes a first radio wave receiving means (for example, radio wave transceiver section 701 of FIG 2) that receives the first radio wave, and a second radio wave transmission means (for example, radio wave transceiver section 701 of FIG 2) that transmits the second radio wave to the moving means when receiving the first radio wave. Thus, the drone 1 can grasp the positional relationship between the device itself and the radio wave device 5, and therefore the moving distance of the device itself can be easily estimated in the pipeline P.

### [Fourth embodiment]

### (Water intake device)

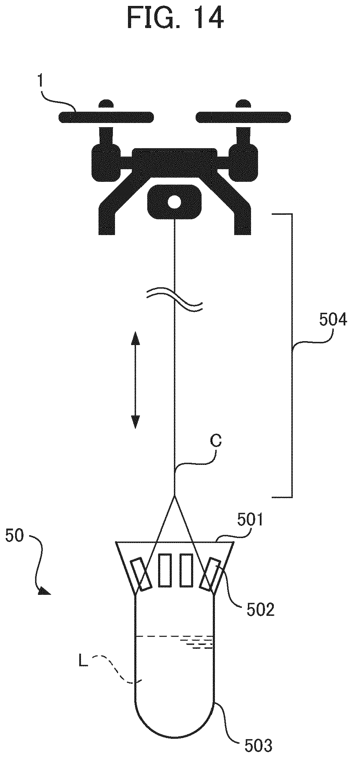

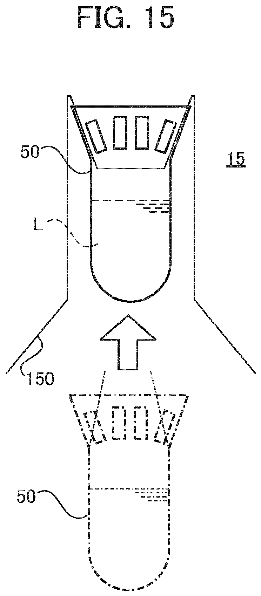

Conventionally, there is a technique of collecting a water sample for investigation as a technique for performing water investigation of water flowing through the inside of a pipeline, water flowing through a river, or the like. The collection of the water sample has been performed by manual work by a water investigation member. However, when collecting the water sample by the manual work in the pipeline or the river, risk is involved depending on collection places in some cases. In such a case, the utilization of a drone enables the collection of the water sample without risk. Hereinafter, a technique of collecting the water sample utilizing the drone 1 is described with reference to FIG 14 and FIG 15.

FIG 14 is an image view illustrating a state in which the drone 1 files with a collecting container 50 for collecting a water sample L suspended therefrom.

The collecting container 50 is a container for collecting the water sample L and includes an opening section 501, water passage holes 502, a water storage section 503, and a suspending section 504 as illustrated in FIG 14. The collecting container 50 is designed such that an upper section is heavier than a lower section. The opening section 501 is an opening for taking in the water sample L into the collecting container 50. Although not illustrated, a valve for taking in the water sample L may be separately provided in the bottom surface of the collecting container 50. The water passage holes 502 are one or more holes provided near the opening section 501 and are holes for taking in the water sample L into the collecting container 50 as with the opening section 501. By providing the water passage holes 502 near the opening section 501, the water sample L can be caused to efficiently flow into the collecting container 50. The water sample L is taken into the collecting container 50, and the water storage section 503 stores the water sample L in the collecting container 50. The suspending section 504 contains a suspending member C of suspending the collecting container 50 from the drone 1, a motor for winding up the suspending member C, and the like. The suspending member C is not particularly limited insofar as a member can suspend the collecting container 50 from the drone 1 and has water resistance. For example, various substances, such as a resin cord having water resistance and a metal wire, can be adopted.

As illustrated in FIG. 14, the drone 1 flies in a space in a pipeline and above a river or the like to move to a collection point of the water sample L in a state of suspending the collecting container 50. When the drone 1 reaches the collection point of the water sample L, the drone 1 extends the suspending member C downward while hovering, and then causes the collecting container 50 to land on the water to collect water. The drone 1 may descend to cause the collecting container 50 to land on the water without extending the suspending member C downward. The collecting container 50 is designed such that the upper section is heavier than the lower section. Therefore, even when the collecting container 50 perpendicularly lands on the water in the state illustrated in FIG 14, the collecting container 50 immediately lies on the water surface due to the weight of the upper section. This can make it easy to take in water from the opening section 501 and the water passage holes 502. Further, the collecting container 50 is designed such that the upper section is heavier than the lower section, and therefore pre-washing can also be performed easily.

As described above, a valve for taking in the water sample L may be separately provided in a bottom section of the collecting container 50. By providing such a valve, at the moment when the collecting container 50 lands on the water, the water sample L can be taken in from the bottom section of the collecting container 50. More specifically, the water sample L can be taken in only by stroking the water surface with the bottom section of the collecting container 50. Therefore, when the amount of the water sample L to be collected is small, for example, the water sample L may be collected using only the valve provided in the bottom section of the collecting container 50. Whereas, when the amount of the water sample L to be collected is large, the water sample L may be collected using the valve provided in the bottom section of the collecting container 50, the opening section 501, and the water passage holes 502. This enables the change of a collection method according to the amount of the water sample L to be collected, and therefore the water sample L can be efficiently collected.

The drone 1 stores the collecting container 50 in the device itself when the water sample L is stored in the water storage section 503 of the collecting container 50. Specifically, the suspending section 504 of the drone 1 winds up the suspending member C to store the collecting container 50 in the sample storage section 15. Herein, a specific technique of storing the collecting container 50 in the sample storage section 15 is described with reference to FIG 15.

FIG 15 is an image view illustrating a state in which the collecting container 50 is stored in the sample storage section 15.

As illustrated in FIG. 15, the shape of an opening section 150 of the sample storage section 15 is a shape enlarged to the outside. Thus, the sample storage section 15 can easily guide the pulled-up collecting container 50 in the sample storage section 15. Further, the shape of the inside of the sample storage section 15 is formed into a cork shape according to the shape of the opening section 501 of the collecting container 50. Therefore, the sample storage section 15 can close and seal the opening section 501 simultaneously with the storing of the water sample L. This can prevent, during the transportation of the collected water sample L, spilling of the water sample L or mixing of other substances with the water sample L.

The drone 1 can mount the distance sensor S directed downward in order to detect the distance D between the water surface, the ground or the like and the device itself. However, when performing the work of collecting the water sample L using the collecting container 50 or work of conveying a load while suspending the load with a cord or the like, for example, there is a risk that the collecting container 50, the load, or the like may interfere with the distance sensor S, so that the distance D cannot be accurately detected. Thus, the orientation of the distance sensor S mounted on the drone 1 is changed to allow for detecting the distance D to a predetermined position present in a direction at a certain angle from the vertical downward direction of the drone 1. This can avoid the presence of the collecting container 50, the load, or the like from being present on the extension line in a direction where the distance sensor S is directed, and therefore the distance sensor S can detect the distance D between the water surface, the ground or the like and the device itself without suffering from interference. However, there is a possibility that the collecting container 50, the load, or the like suspended from the drone 1 flying in the air greatly sways under the influence of wind, centrifugal force, and the like. Therefore, there is a risk that the distance sensor S may suffer interference and cannot accurately detect the distance D. Thus, the drone 1 may be mounted with a plurality of the distance sensors S for detecting the distances D to predetermined positions present in a plurality of directions, respectively, other than the downward direction. Thus, the drone 1 can safely fly while estimating the distance between the water surface, the ground or the like and the device itself without suffering from interference from the collecting container 50, the load, or the like even in the state of suspending the collecting container 50, the load, or the like therefrom.

Further, the information processing system to which the present invention is applied is not limited to the fourth embodiment described above and can take various kinds of embodiments having the following configurations. More specifically, a moving body (for example, drone 1 of FIG 1) of the information processing system to which the present invention is applied including a drive means (for example, drive unit 11 of FIG 2) for moving in space includes: a suspending means (for example, suspending section 504 of FIG 14) that suspends an object; a distance detection means (for example, distance detection unit 101 of FIG 2) that detects a distance to at least one predetermined position present around the moving body during movement in the space; a shortest distance calculation means (for example, shortest distance calculation unit 103 of FIG 2) that calculates the shortest distance to an object present below the moving body based on the distance detected; and a drive control means (for example, flight control unit 104 of FIG 2) that carries out control of the driving of the drive means such that the shortest distance is not equal to or less than a predetermined value. Thus, the drone 1 can fly without falling while estimating the distance between the ground or the like and the device itself without suffering from interference from the object in the state of suspending the object.

Further, a collection means (for example, collecting container 50 of FIG. 14) that collects liquid and
a storage means (for example, sample storage section 15 of FIG 15) that stores the collected liquid can be further included. The object can be a collecting container storing the liquid. Thus, the drone 1 can fly without falling while estimating the distance between the water surface, the ground or the like and the device itself without suffering from interference from the collecting container 50 even in the state of suspending the collecting container 50 storing the water sample L therefrom.

### [Fifth embodiment]

### (Self-position estimation using marker)

As a technique for the distance detection unit 101 of the drone 1 to estimate the shortest distance SD between the device itself and the predetermined position WP of the wall surface W, a technique utilizing the position information obtained from the GPS satellite G or the distance sensors S are available as described above. However, there is a case where the position information cannot be obtained from the GPS satellite G or a case where the distance sensor S does not normally function depending on a situation where the drone 1 is placed in some cases. In such a case, the flight of the drone 1 can be controlled by estimating the shortest distance SD based on image information obtained from images of the marker M and the like captured by the image capture unit 13. Hereinafter, a flight control technique of the drone 1 using the marker M is described with reference to FIG. 16.

FIG 16 is an image view illustrating an example of the marker M whose image is captured by the drone 1.

The marker M of FIG 16 is a marker having a ladder shape in which two straight lines arranged in parallel to each other and four straight lines arranged at equal intervals perpendicularly to these two straight lines are combined. Line widths LW of all the straight lines configuring the marker M are the same. The marker M is installed on the wall surface W illustrated in FIG. 1, for example. A technique of installing the marker M on the wall surface W is not particularly limited. For example, the marker M may be printed on the wall surface W or the marker M having a seal shape may be stuck to the wall surface W. The marker M is not limited to those having a two-dimensional shape. Those having a three-dimensional shape assembled with members having water resistance and durability and the like may be acceptable. Further, a marker containing a plurality of colors may be created.

The drone 1 estimates the orientation of the device itself and the distance D between the device itself and the marker M based on image information obtained from captured images of the marker M when the position information cannot be obtained from the GPS satellite G or when the distance sensor S does not normally function. Specifically, the drone 1 stores information on the line widths of the marker M and information on the intervals (interval LS and interval WS) of both vertical and horizontal lines. Thus, information to be compared with the image information of the marker M can be acquired in advance. The information may be stored at any timing insofar as the timing is before estimating the orientation of the device itself and the distance D between the device itself and the marker M. The drone 1 captures images of the marker M during the flight. The drone 1 calculates the distance D from the marker M to the drone 1, the orientation of the device itself with respect to the marker M, the distance where the device itself has moved toward the marker M, and the like based on the image information based on the captured images of the marker M. The drone 1 estimates the orientation of the device itself and the distance D between the device itself and the marker M based on these calculation results. Further, when the marker containing a plurality of colors is created, the orientation of the device itself and the distance D between the device itself and the marker M are estimated based on color information in image information obtained from the captured images of the marker M.

The drone 1 may estimate the orientation of the device itself and the distance D between the device itself and the marker M based on the image information obtained from the captured images of the marker M without being limited to the case where the position information cannot be obtained from the GPS satellite G or the case where the distance sensor S does not normally function. For example, the distance sensor S and image processing may be used in combination. This enables the drone 1 to estimate the orientation of the device itself and the distances D between the device itself and the marker M with higher accuracy.

In the description given above, the marker M is the marker of the ladder shape in which two straight lines arranged in parallel to each other and four straight lines arranged at equal intervals perpendicularly to these two straight lines are combined and the line widths LW of all the straight lines configuring the marker M are the same but the present invention is not particularly limited thereto. Specifically, the line width LW of all the straight lines configuring the marker M may not be the same, for example. More specifically, the line widths LW of all the straight lines configuring the marker M may be different from each other. In this case, the drone 1 may estimate the orientation of the device itself and the distances D between the device itself and the marker M based on information on the line width LW of all the straight lines configuring the marker M.

Further, when a plurality of the markers M are installed on the wall surface W, the markers M may be used in which the line widths LW of the plurality of the markers M are varied based on a distance ratio between the markers M and the drone 1. For example, the drone 1 can perform control such that the distance D from the device itself to the marker M is shortened with respect to the marker M adopting the line width LW thinner than the line width LW in a predetermined distance. Specifically, the drone 1 can perform control to be able to fly a distance where the line width LW in a captured image reaches a predetermined thickness, for example. This enables the drone 1 to control the distance D between the device itself and the marker M based on a difference between the line widths LW.

Further, the marker M is utilizable when the outline remains, even when the marker M has a certain degree of breakage or dirt or a print of a pattern. More specifically, even when the marker M has a certain degree of breakage, dirt, or the like, it suffices if the line width LW, the interval WS, and the interval LS can be specified based on any shape of the ladder shape. Even in such a case, the drone 1 can estimate the orientation of the device itself and the distance D between the device itself and the marker M described above.

More specifically, even when sections other than the intersection in the ladder shape of the straight lines configuring the marker M are omitted, for example, the drone 1 can estimate the orientation of the device itself and the distance D between the device itself and the marker M described above. In such a case, straight line sections of the marker M can be utilized as described below. For example, a conveyor belt can be installed to pass the center of the straight line forming the interval LS, i.e., in a direction parallel to the direction of the long sides of the marker M. This enables the drone 1 to estimate the orientation of the device itself and the distance D between the device itself and a specific position on the conveyor belt on which the marker M is installed, for example. For example, a road or the like can be installed to pass the center of the straight line forming the interval LS, i.e., in a direction parallel to the direction of the long sides of the marker M. Thus, even when a vehicle passes the road to break the straight lines forming the intervals LS configuring the marker M, for example, the drone 1 can estimate the direction of the device itself and the distance D between the device itself and the specific position on the road on which the marker M is installed. Further, the conveyor belt, the road, and the like can be installed to pass the center of the straight lines of the marker M in the example described above but the marker M can be installed while being divided. Specifically, by dividing the marker M at positions on the straight lines forming the intervals LS of the marker M and installing two markers having a shape in which the straight lines forming the intervals LS are short at predetermined intervals, for example, the manufacturing cost or the cost for installation work of the markers can be reduced compared to the case where the marker M is installed.

Further, some of the straight lines forming the intervals LS may be completely lost due to breakage, dirt, or the like, for example. In such a case, the drone 1 can estimate the intervals LS based on the intervals between the straight lines forming the two intervals WS parallel to each other, for example. Thus, the marker M can be formed into a shape in which the straight lines forming the intervals LS are deleted or reduced to be shorter than the interval LS, for example. Further, one of the straight lines forming the intervals WS may be completely lost due to breakage, dirt, or the like, for example. In such a case, the drone 1 can estimate the interval LS based on the interval WS based on a ratio between the interval LS and the interval WS, for example. More specifically, the drone 1 can estimate the line width LW, the interval WS, and the interval LS based on at least one of the line width LW, the interval WS, or the interval LS actually measured based on each ratio of the line width LW, the interval WS, or the interval LS. More specifically, the drone 1 can estimate the line width LW, the interval WS, and the interval LS based on any shape of the ladder shape of the captured image of the marker M by a presumption method in the above-described example. Thus, the manufacturing cost or the cost for installation work or repair in breakage of the marker can be reduced compared to the case where the marker M of the example of FIG 16 is installed and maintained. Further, the drone 1 can also output an amount about ease of recognition of the marker M. This enables the drone 1 to evaluate an attrition rate based on the amount about the ease of recognition of the marker M and notify a responsible person of the marker M about the attrition rate. This enables the responsible person of the marker M to take measures, such as performing re-installation of the marker M, before the marker M is heavily attrited. It suffices if the amount about the ease of recognition of the marker M varies depending on ease of recognition. Further, the evaluation of the attrition rate and the notification to the responsible person of the marker M may be performed by other information processing devices acquiring the information from the drone 1.

Further, the marker M can also be installed on the drone 1 side instead of the wall surface W. When the marker M is mounted on the drone 1, the information transceiver 4 installed on the ground or in space, for example, captures images of the marker M of the drone 1 with a camera (not illustrated) or the like. The information transceiver 4 calculates position information of the drone 1 based on image information obtained from the captured images of the marker M and position information of the device itself. The information transceiver 4 transmits the position information of the drone 1 obtained as a calculation result to the drone 1 while superimposing the position information on radio waves and the like transmitted by the device itself thereon. This enables the drone 1 to estimate the direction of the device itself and the distances D between the device itself and the marker M.

Further, the information processing system to which the present invention is applied is not limited to the fifth embodiment described above and can take various kinds of embodiments having the following configurations. More specifically, the information processing system to which the present invention is applied includes a moving body (for example, drone 1 of FIG 1) having a drive means (for example, drive unit 11 of FIG 2) for moving in space and a marker (for example, marker M of FIG 16) installed on a predetermined position on the ground, in which the moving body includes: an image capture means (for example, image capture unit 13 of FIG 2) that captures an image of the marker during movement in the space; a direction estimation means (for example, orientation detection unit 102 of FIG 2) that estimates the direction of the device itself based on image information obtained from the captured image of the marker whose image is captured; a shortest distance calculation means (for example, orientation detection unit 102 of FIG. 2) that calculates the shortest distance (for example, shortest distance SD) from the device itself to the marker based on the image information; and a drive control means that carries out control of the driving of the drive means such that the shortest distance is not equal to or less than a predetermined value. This enables the drone 1 to estimate the distance between the marker M and the device itself and the direction based on the image information obtained from the captured image of the marker M. As a result, the drone 1 can automatically fly without contacting or colliding with objects other than the device itself.

### [Sixth embodiment]

### (Abnormality detection of motor or control device thereof)

Atypical example of the driving by the drive unit 11 (FIG. 2) possessed by the drone 1 includes the driving by a motor. However, the motor deteriorates with time under the influence of sand, rain, and the like, and poses problems of contact failure and the like in many cases. Further, control devices of the motor and the like also deteriorate with time. The drone 1 of the sixth embodiment includes a deterioration detection unit 106 as illustrated in FIG 2. The deterioration detection unit 106 acquires fresh information indicating a driving situation and a control situation in the drive unit 11 or the flight control unit 104 as feedback information and detects deterioration of the drive unit 11 or the flight control unit 104 based on the acquired feedback information. This can prevent accidents, such as a crash of the drone 1.

The contents of the feedback information required in order to detect deterioration of the drive unit 11 or the flight control unit 104 by the deterioration detection unit 106 are not particularly limited. For example, when the drive unit 11 contains a three-phase motor (three-phase induction motor) controllable by a rotation signal indicating the actual number of rotations of the motor and the like, the deterioration detection unit 106 detects deterioration of the drive unit 11 based on the following feedback information, for example. More specifically, the deterioration detection unit 106 acquires a rotation signal and a voltage as the feedback information from the drive unit 11, and then estimates a current EA to essentially flow into the drive unit 11 based on the acquired feedback information. Then, the deterioration detection unit 106 compares the estimated current EA with a current RA actually flowing into the drive unit 11, and then, when determining that Current EA < Current RA is established, detects deterioration of the drive unit 11. More specifically, the deterioration detection unit 106 detects a state in which a current larger than expected flows as the "deterioration".

When the drive unit 11 does not contain a three-phase motor controllable by the rotation signal indicating the actual number of rotations of the motor and the like, the deterioration detection unit 106 can detect deterioration of the drive unit 11 by the following technique, for example. More specifically, the deterioration detection unit 106 acquires a voltage as the feedback information from the drive unit 11, and then estimates the current EA to essentially flow into the drive unit 11 based on the acquired feedback information. Then, the deterioration detection unit 106 compares the estimated current EA with the current RA actually flowing into the drive unit 11, and then, when determining that Current EA < Current RA is established, detects deterioration of the drive unit 11.

When estimating the current EA to essentially flow into the drive unit 11, information on the weight of the drone 1 is required. Unless the weight of the drone 1 is acquired in advance, the deterioration detection unit 106 acquires the number of rotations of the motor in the takeoff of the drone 1 as the feedback information from the drive unit 11, and then estimates the weight of the drone 1 based on the number of rotations. More specifically, the deterioration detection unit 106 acquires a voltage and the number of rotations of the motor in the takeoff of the drone 1 as the feedback information from the drive unit 11, and then estimates the weight of the drone 1 and the current EA to essentially flow into the drive unit 11 based on the acquired feedback information. Then, the deterioration detection unit 106 compares the estimated current EA with the current RA actually flowing into the drive unit 11, and then, when determining that Current EA < Current RA is established, detects deterioration of the drive unit 11.

Thus, the deterioration detection unit 106 can detect deterioration of the drive unit 11 based on the various kinds of feedback information described above. Hence, when the drone 1 contacts a certain object or is subject to the influence of a sudden gust of wind or the like during the flight, for example, the torque of the drive unit 11 changes, and therefore the deterioration detection unit 106 can detect deterioration of the drive unit 11 based on the various kinds of feedback information. Information on the motor included in the feedback information may be information on one motor but is more preferably information on a plurality of motors. The accuracy of the detection results can be improved by detecting deterioration based on the information on the plurality of motors. Further, since each of the plurality of motors can be analyzed, the analysis results for each motor can be accumulated in the drone 1. This enables the creation of a map determining the safety of the drone 1 based on the accumulated analysis results for each motor. As a result, the maintenance of the drone 1 is facilitated. The deterioration detection unit 106 can detect the "deterioration" based on comparable information included in the feedback information about the flight control unit 104 as with the case of the drive unit 11.

Further, the information processing system to which the present invention is applied is not limited to the sixth embodiment described above and can take various kinds of embodiments having the following configurations. More specifically, the information processing system to which the present invention is applied includes a moving body (for example, drone 1 of FIG 1) having a drive means (for example, drive unit 11 of FIG 2) for moving in space, in which the moving body includes: a deterioration detection unit (for example, deterioration detection unit 106 of FIG 2) that acquires information including a driving situation of the drive means as feedback information, and then detects deterioration of the drive means based on the feedback information. Thus, the drone 1 can detect deterioration of the drive unit 11, and therefore this can prevent accidents, such as a crash.

Further, the feedback information can include information on the number of rotations of a motor and information on a voltage in the drive means. Thus, the drone 1 can detect deterioration of the drive unit 11 based on the information on the number of rotations and the information on the voltage of the motor, and therefore this can prevent accidents, such as a crash.

### [Seventh embodiment]

### (Interface for automatic control adjustment)

In the work, such as the inspection, by the drone 1 in the first to sixth embodiments described above, the self-safety cannot be completely secured in a self-contained manner only by the drone 1. Thus, the safety of the automatic flight control by the drone 1 is complemented by determination of the pilot U through the pilot terminal 2. This can dramatically improve the safety of the work of the drone 1. Specifically, even in the case where the drone 1 is automatically flying, when the pilot U has perceived a risk of a collision of the drone 1 or the like, the pilot U transmits a command of risk aversion, emergency stop, or the like to the drone 1 through the pilot terminal 2. For example, within a dark pipeline, such as a sewer, it is difficult for the drone 1 to perform image recognition of a thin wire or the like. In such a case, the pilot U monitors the situation around the drone 1 through the pilot terminal 2, and then transmits the command of risk aversion, emergency stop, or the like to the drone 1 in order to complement the safety of the drone 1 as necessary. This can dramatically improve the safety of the work of the drone 1.

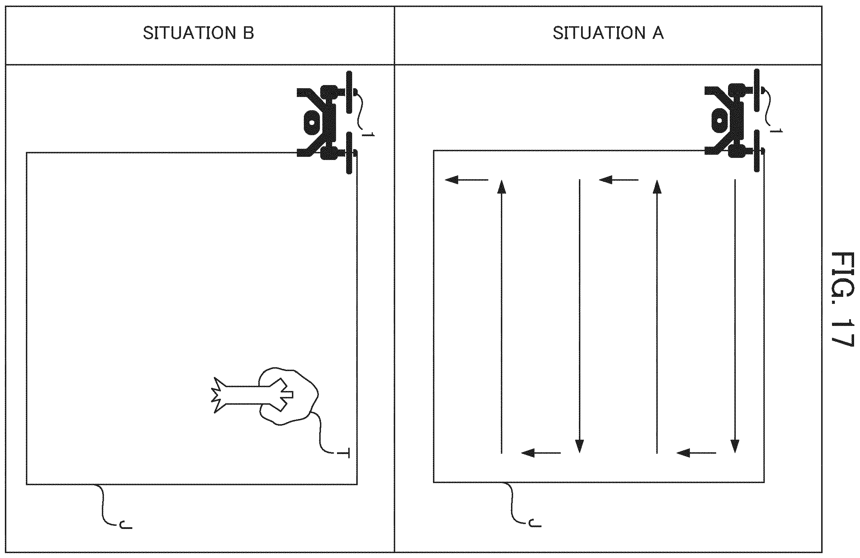

Further, even when the drone 1 flies in a bright place without being limited to the case where the drone 1 flies in the dark pipeline, the safety of the automatic flight control of the drone 1 needs to be complemented by determination of the pilot U through the pilot terminal 2 in some cases. A specific example thereof is described with reference to FIG. 17.

FIG 17 is an image view illustrating a state in which the drone 1 performs predetermined work while uniformly flying above a field J.

When the drone 1 uniformly flies above the field J, the drone 1 makes a flight plan of traveling above the field J in directions indicated by arrows in situation A illustrated in FIG 17 based on map information stored in itself, and then flies based on the flight plan. In actual, however, an object as an obstacle, such as a tree T, in work of the drone 1 is present in a part of the field J in situation B illustrated in FIG 17 in some cases. It is a matter of course that information indicating the presence of the tree T is not included in usual map information. Therefore, in order to avoid a collision with the tree T during the flight in a case where the drone 1 flies according to the flight plan, the drone 1 carries out flight control illustrated in FIG 3 to FIG. 13. In usual, the collision with the tree T can be avoided by an automatic flight control function of the drone 1 but it is not 100% guaranteed that the collision can be avoided.

Therefore, the safety of the automatic flight control by the drone 1 is complemented by determination of the pilot U through the pilot terminal 2. This can dramatically improve a possibility of avoiding the collision of the drone 1 with the tree T. Specifically, the pilot U causes the drone 1 to carry out the automatic flight control while viewing a flight image as viewed from the drone 1 displayed on the pilot terminal 2. Then, when the pilot U senses a possibility of the collision with the tree T, the pilot U performs an operation for avoiding the collision. The pilot terminal 2 transmits information for carrying out flight control to avoid the collision of the drone 1 with the tree T to the drone 1 based on contents of an operation of the pilot U. The drone 1 carries out the flight control to avoid the collision of the device itself with the tree T based on the information transmitted from the pilot terminal 2. Hereinafter, a specific example of an operation screen for operating the drone 1 displayed on the pilot terminal 2 is described.

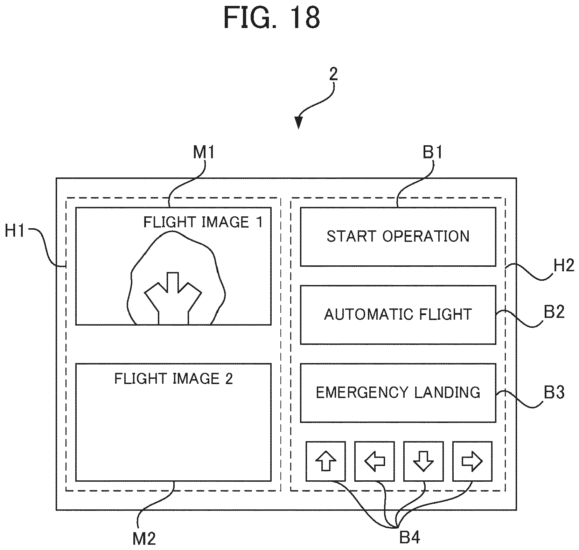

FIG 18 is an image view illustrating an example of the operation screen for operating the drone 1 displayed on the pilot terminal 2.

The operation screen displayed on the pilot terminal 2 can contain display regions H1 and H2 as illustrated in FIG 18, for example. The display region HI contains a monitor M1 and a monitor M2. The monitor M1 displays a state in front of the drone 1 viewed from a camera (not illustrated) disposed on the front of the drone 1 as a flight image 1 in real time. The monitor M2 displays a state below the drone 1 viewed from a camera (not illustrated) disposed on a bottom section of the drone 1 as a flight image 2 in real time. This enables the pilot U to visually recognize the state in front of the drone 1 and the state below the drone 1 in real time. More specifically, the pilot U can control the drone 1 with feeling of boarding the drone 1.

The display region H2 contains a button B1, a button B2, a button B3, and buttons B4. The button B1 is a button for starting the drone 1 to start an operation of the drone 1. When the button B1 is depressed, the drone 1 is started and takes off.

The button B2 is a button for causing the drone 1 to automatically fly. When the button B2 is depressed, the drone 1 starts flight according to a flight plan. The drone 1 continues the flight according to the flight plan as long as the state in which the button B2 is depressed is maintained. Then, when the state in which the button B2 is depressed is released, the drone 1 temporarily stope the flight according to the flight plan and performs hovering. More specifically, the drone 1 performs the flight according to the flight plan only when the pilot U continuously presses the button B2 and, when the pilot U releases a finger from the button B2, performs hovering on the spot. When the pilot U continuously depresses the button B2, the drone 1 continues the automatic flight until the flight plan is completed, and then automatically lands after reaching the sky above a landing point. A hovering button (not illustrated) for stopping the automatic flight of the drone 1 may be separately provided. By separately providing the hovering button, the pilot U can cause the drone 1 to continue the flight according to the flight plan even when the pilot U does not continuously depress the button B2. Then, when the pilot U has perceived a risk of a collision of the drone 1 from an image displayed on the monitor M1 or the monitor M2, the pilot U can cause the drone 1 to temporarily stop the flight according to the flight plan and hover by depressing the hovering button.

The button B3 is a button for causing the drone 1 to make an emergency landing. When the button B3 is depressed, the drone 1 carries out control to make an emergency landing on the spot or land on a near safe place regardless of whether the drone 1 is in the middle of the flight according to the flight plan. Specifically, when an unidentified moving body is displayed on the monitor M1, the pilot U visually recognizing the unidentified moving body can release a finger from the button B2 until the unidentified moving body passes to cause the drone 1 to hover, for example. Further, the pilot U can depress the button B3 to also cause the drone 1 to make an emergency landing.

The buttons B4 are cursor keys and contain four buttons indicating the leftward, rightward, upward, and downward directions. The buttons B4 illustrated in FIG 18 can be depressed to set a state (state in which the drone 1 is hovering) where the button B2 is not depressed. When the buttons B4 are depressed, the direction of the drone 1 is changed in the same direction as the arrow indicated by the depressed button. This enables the pilot U to easily change the direction in which the drone 1 flies. For example, when the tree T is displayed near a center section of the monitor M1 during the automatic flight of the drone 1, the pilot U performs the following operations to the pilot terminal 2. More specifically, the pilot U releases a finger from the button B2 to cause the drone 1 to hover. Next, the pilot U depresses the cursor key indicating the rightward direction among the buttons B4, for example. Thus, the drone 1 changes the orientation of the device itself to the rightward direction. Then, when the button B2 is depressed by the pilot U, the drone 1 safely pass the right side of the tree T, and then resumes the flight according to the flight plan again. The configuration of the buttons B4 illustrated in FIG. 18 is an example and is not limited to the four buttons indicating the leftward, rightward, upward, and downward directions. For example, the buttons B4 may contain a plurality of buttons, such as forward, backward, leftward, and rightward, upward and downward, rotation, and the like.

Further, although not illustrated, a map during the flight of the drone 1 may be displayed on the pilot terminal 2. The map may be able to be arbitrarily displayed in an enlarged or reduced scale by an operation of the pilot U. The flight plan of the drone 1 may be able to be entirely or partially changed by adding a flight route of the drone 1 or the like to the map with a finger by the pilot U, for example. More specifically, the pilot U can correct the flight route to a flight route avoiding an obstacle using the flight route based on the flight plan made by the drone 1 as the base. Further, the drone 1 may be caused to re-calculate a flight route to achieve a flight route in which an obstacle is not present on the flight route by displaying the flight route and an icon indicating an obstacle in a superimposed manner on the map displayed on the pilot terminal 2. This can avoid the collision of the drone 1 with an obstacle on the flight route.

Further, the information processing system to which the present invention is applied is not limited to the seventh embodiment described above and can take various kinds of embodiments having the following configurations. More specifically, the information processing system to which the present invention is applied includes a moving body (for example, drone 1 of FIG 1) including a drive means (for example, drive unit 11 of FIG 2) for moving in space and an image capture means (for example, image capture unit 13 of FIG 2) that captures an image around itself, in which the moving body can be remotely controlled using a pilot terminal (for example, pilot terminal 2 of FIG 1) operated by a pilot and an image captured by the image capture unit and various buttons for controlling the moving body are displayed on the pilot terminal (for example, operation screen of FIG 18). This enables the pilot U to control the drone 1 while visually recognizing a state around the drone 1.

Further, the pilot terminal can display the image captured by the image capture means in real time. This enables the pilot U to control the drone 1 while visually recognizing a state around the drone 1 in real time.

Further, the various buttons include a first button (for example, button B1 of FIG 18) for carrying out control to start the moving body, a second button (for example, button B2 of FIG 18) for carrying out control to continue automatic flight by the moving body, and a third button (for example, button B3 of FIG. 18) for carrying out control to cause the moving body to make an emergency landing. Thus, the pilot U can avoid the collision of the drone 1 with an obstacle on the flight route.

Although the first embodiment to the seventh embodiment of the present invention are described above, the present invention is not limited to the above-described embodiments, and alternations, improvements, and the like within the scope where the objects of the present invention can be achieved are included in the present invention.

For example, as the moving body in the present invention, a small unmanned aircraft movable in a three-dimensional space is described with reference to the drone moving in the air in the embodiments described above but the moving body is not limited to the drone. For example, a device pulled down from the above of the wall surface for work using a cord or the like or vehicles, watercrafts, and the like moving in a two-dimensional space are examples of the moving body in the present invention.

Further, the series of processing described above may be executed by hardware or software. In other words, the block diagram of FIG 2 is merely an example of configurations and is not particularly limited. More specifically, it suffices if the information processing system has a function capable of carrying out the above-described series of processing as a whole, and blocks to be used to realize this function are not particularly limited to the example of FIG 2. In addition, one functional block may only hardware, only software, or a combination thereof.

Further, for example, in a case where a series of processing are carried out by software, a program constituting the software is installed in a computer or the like from a network or a recording medium. The computer may be a computer incorporated in dedicated hardware. Further, the computer may be a computer capable of carrying out various functions by installing various programs, for example a server, a smartphone, a personal computer, various devices, or the like.

Further, for example, a recording medium including such a program not only contains a removable medium (not illustrated) distributed separately from a main body of the apparatus in order to provide a program to the user, but also contains a recording medium and the like provided to the user in a state of being incorporated in the main body of the apparatus in advance.

In the present specification, steps describing programs to be recorded on the recording medium include not only processes performed in chronological order according to the order but also processes executed in parallel or individually, though not necessarily being processed in chronological order. Further, in this specification, the term of the system means an entire apparatus containing a plurality of apparatuses, a plurality of means, and the like.

### EXPLANATION OF REFERENCE NUMERALS

- G:: GPS satellite
- 1:: drone
- 2:: pilot terminal
- 3:: server
- 4:: information transceiver
- 5:: radio wave device
- U:: pilot
- N:: network,
- K:: Wi-Fi (registered trademark) spot and the like
- 11:: drive unit
- 12:: flight control module
- 13:: image capture unit
- 14:: first communication unit
- 15:: sample storage section
- 101:: distance detection unit
- 102:: orientation detection unit
- 103:: shortest distance calculation unit
- 104:: flight control unit
- 105:: second communication unit
- 106:: deterioration detection unit
- 601:: position acquisition unit
- 602:: communication unit
- 701:: radio wave transceiver
- W:: wall surface
- WP, WP1 to WP4:: predetermined position,
- S, S1 to 4:: distance sensor
- SD, SD1, SD2:: shortest distance
- Y:: virtual center axis
- D, D1 to D4:: distance
- F:: ground
- FP:: predetermined position
- R:: relay drone
- PP, PP1 to PP4:: predetermined position
- E:: entrance
- 501:: opening section (collecting container)
- 502:: water passage hole
- 503:: water storage section
- 504:: suspending section
- C:: suspending member
- L:: water sample
- 50:: collecting container
- 150:: opening section (sample storage section)
- LW:: line width
- LS, WS:: interval
- M:: marker
- J:: field
- T:: tree
- HI, H2:: display region
- M1, M2:: monitor
- B1 to B4:: button

## Claims

1. An information processing system including a moving body having a drive unit for moving in space,
the moving body comprising:
a distance detection unit configured to detect a distance to at least one predetermined position of a surface of an object during movement in a space near the object;
a shortest distance calculation unit configured to calculate a shortest distance from the moving body to the surface of the object based on the distance detected; and
a drive control unit configured to carry out control of driving of the drive unit such that the shortest distance is not equal to or less than a predetermined value.

2. The information processing system according to claim 1, wherein the distance detection unit is configured to detect the distance based on image information obtained from a captured image of the at least one predetermined position.

3. The information processing system according to claim 1 or 2 further comprising:
an orientation detection unit configured to detect an orientation of the moving body based on at least one distance detected, wherein
the drive control unit further
carries out control of the driving of the drive unit such that at least one distance of the distance is not equal to or less than a predetermined distance considering the direction.

4. The information processing system according to any one of claims 1 to 3, wherein the moving body is a small unmanned aircraft.
